# EUROPÄISCHE PATENTSCHRIFT

(11) **EP 3 552 517 B1**
(45) Veröffentlichungstag und Bekanntmachung des Hinweises auf die Patenterteilung: **31.08.2022**
(21) Anmeldenummer: 19170286.9
(22) Anmeldetag: 13.07.2016
(51) Int. Cl.: A46D 3/04

(54) **VERFAHREN UND VORRICHTUNG ZUM HERSTELLEN EINER BÜRSTE**
METHOD AND DEVICE FOR PRODUCING A BRUSH
PROCÉDÉ ET DISPOSITIF DE FABRICATION D'UNE BROSSE

(30) Priorität: 13.07.2015 BE 201505446; 12.01.2016 BE 201605018; 26.04.2016 DE 102016107759
(43) Veröffentlichungstag der Anmeldung: 16.10.2019
(62) Teilanmeldung aus: 16738756.2
(73) Patentinhaber: GB Boucherie NV, 8870 Izegem (BE)
(72) Erfinder: Boucherie, Bart, 8870 Izegem (BE); Vandenbussche, Henk, 8870 Izegem (BE)
(74) Vertreter: Prinz & Partner mbB

(56) Entgegenhaltungen:
- EP-A1- 2 078 472
- US-A- 4 132 449

## Beschreibung

Die Erfindung betrifft ein Verfahren und eine Vorrichtung zum Herstellen einer Bürste, die einen Borstenträger aus thermoplastischem Kunststoff mit zumindest einer Verankerungsöffnung hat, in welche zumindest eine Borste eingesetzt und darin verankert wird.

Beim Herstellen von Bürsten, insbesondere Zahnbürsten, aber auch Haushaltsbürsten, haben sich zwei Verfahren in der Praxis durchgesetzt, nämlich das Befestigen der Borstenbüschel mittels eines Ankers (Metallplättchen oder Drahtschlinge) oder ankerlos. Das ankerlose Verfahren sieht im Gegensatz zur Verwendung eines Ankers vor, dass das Borstenbüschel nicht gefaltet und an seiner Faltstelle im Borstenträger befestigt wird, sondern an einem Ende am Borstenträger durch Kleben oder thermisch arretiert wird. Ein übliches, sich in der Praxis durchgesetztes Verfahren sieht dabei vor, dass der Borstenträger Öffnungen hat, durch die die Borstenbüschel gesteckt werden. Mit ihrem rückseitigen Ende ragen die Borstenbüschel dann aus den Öffnungen vor und werden auf der Rückseite des Borstenträgers erwärmt. Das thermoplastische Material der Borsten schmilzt damit, wodurch die Borsten materialmäßig ineinander übergehen und sich eine Verdickung ergibt, mittels der ein Herausziehen der einzelnen Borsten nach vorne unmöglich wird. Üblicherweise werden die zahlreichen Borstenbüschel rückseitig mittels Heißluft oder eines heißen Stempels verflüssigt, sodass das Material der einzelnen Borstenbüschel ineinander übergeht und sich rückseitig eine Art Schicht aus verflüssigten Borstenenden ergibt. Anschließend wird diese Rückseite überdeckt, insbesondere überspritzt.

Nachteilig an dieser Lösung ist, dass aufgrund dieser rückseitigen notwendigen Abdeckung ein erheblicher verfahrensmäßiger und vorrichtungsmäßiger Mehraufwand betrieben werden muss. Zu beachten ist dabei, dass gerade bei Zahnbürsten die Übergangsflächen zwischen benachbarten Schichten möglichst spaltfrei ausgeführt werden, um Hygieneprobleme zu vermeiden.

Unter dem Begriff "Borstenträger" ist dasjenige Teil der fertigen Bürste zu verstehen, welches die Borste oder die Borstenbüschel trägt. Der Borstenträger kann dabei der gesamte Bürstenkörper sein, bei einer Zahnbürste also das einstückig gespritzte Teil aus Stiel, Hals und Kopf, oder auch nur ein vorgefertigter Bestandteil des späteren Bürstenkörpers. Im letzteren Fall ist der Borstenträger üblicherweise ein dünnes Plättchen aus thermoplastischem Kunststoff, welches mit einer oder mehreren Öffnungen zum Befüllen mit einer oder mehreren Borsten oder Borstenbüscheln versehen ist. Nach dem Befüllen und Befestigen der Borsten wird der plättchenartige Borstenträger dann entweder in einen vorgefertigten Bürstenkörper eingesetzt, der beispielsweise eine entsprechende Ausnehmung für den plättchenartigen Borstenträger hat. Alternativ hierzu, dies ist der übliche Fall, wird der plättchenartige Borstenträger umspritzt und damit ergibt sich ein Bürstenkörper aus vorgefertigtem Borstenträger und angespritztem Rest.

Die CH 672 579 A5 schlägt ein Verfahren zum Befestigen von Borstenbüscheln in einem Borstenträger mittels eines Ankerplättchens vor. Das bedeutet, das Borstenbüschel wird gefaltet, und im Faltbereich liegt das Ankerplättchen, welches sich in die Wand der Verankerungsöffnung eindrückt und damit das Borstenbüschel am Borstenträger endgültig fixiert. Damit jedoch die Öffnung an der Stirn- oder Vorderseite des Borstenträgers optimaler geschlossen wird, sodass sich hier keine Bakterien und Sporen ansiedeln und vermehren können, soll ein Wulst am Borstenträger, der um die Verankerungsöffnung umläuft und von der Stirnseite vorsteht, einwärts gepresst werden. Das Borstenbüschel selbst ist aber nicht durch dieses Umformen des Wulstes befestigt, sondern durch den Anker selbst. Die einzelnen Borstenbüschel werden nacheinander über ein Stopfwerkzeug, das das gefaltete Borstenbüschel durch ein Rohr hindurchschiebt, in den Borstenträger eingeschlagen. Das Rohr selbst hat dann an seiner Stirnseite eine Heizung, die ausschließlich am Wulst anliegt und diesen zum Schmelzen bringt oder plastifiziert und anschließend nach radial einwärts drückt.

Neben den oben erwähnten Möglichkeiten zum ankerlosen Befestigen der Borste oder der Borstenbüschel am Borstenträger hat sich in der Theorie noch ein weiteres Verfahren ergeben, welches sich aber in der Praxis nie durchsetzen konnte, nämlich das Einstoßen von Borstenbüscheln in einen Borstenträger, der Öffnungen hat und der vorerhitzt wird. Nach dem Einstoßen der Borstenbüschel in den weichen Borstenträger wird mittels einer Presse der Borstenträger auf seiner Vorderseite, von der die Borstenbüschel vorragen, druckbeaufschlagt, sodass das weiche Material um den Rand der Öffnungen zusammengedrückt wird und die Öffnungen im Querschnitt reduziert werden. Nachfolgend werden hierzu einige Konzepte vorgestellt.

Die DE 198 53 030 A1 sieht vor, dass Borstenbüschel an ihrer Rückseite miteinander zu einer Verdickung verschmolzene Borsten haben. Der Borstenträger besitzt Öffnungen, in die vor dem Einstoßen der Borstenbüschel zylinderförmige Fortsätze einer Heizung eingeführt werden, ohne den Rand der Öffnung zu berühren. Durch diese Strahlungswärme erhitzt sich der innenseitige Rand der Öffnungen lokal. Der Borstenträger wird im Bereich des Randes auf eine gefügeändernde Temperatur gebracht, beispielsweise die Erweichungstemperatur. Durch die Temperaturerhöhung soll das Loch in seinem Querschnitt verringert werden, sodass das Borstenbüschel beim Einstoßen in die Wand eindringen muss. Nach dem Entfernen der Heizung werden dann nämlich die Borstenbüschel mit dem verdickten Ende in die Öffnungen gestoßen, wobei die Verdickung im Querschnitt größer ist als der Öffnungsquerschnitt, sodass die Verdickung in den weichen Bereich des die Öffnung definierenden und umgebenden Randes, also in die entsprechende Wand eindringt. Anschließend wird noch mit einem Stempel die Vorderseite des Borstenträgers verformt, sodass das Material des Borstenträgers gegen die Borstenbüschel gedrückt wird und diese verankern.

Aus der US 5 224 763 ist ein ähnliches Verfahren bekannt, bei dem der Borstenträger einen wulstartig vorstehenden Öffnungsrand hat. Auch hier wird der Rand der Öffnung erwärmt, indem ein zapfenförmiges Heizelement in die Öffnung hineinragt oder mit Heißluft gearbeitet wird. Die Öffnung selbst ist vom Querschnitt her kleiner als das verdickte Ende des Borstenbüschels, sodass dieses nach dem Einstoßen in die Wand der weichen Öffnung darin fixiert wird. Die Halterung für die Borstenbüschel drückt dann den erwärmten umlaufenden Wulst zusammen, sodass zusätzliches Material zur Verfügung steht, um die Öffnung am Übergang zur Stirnseite des Borstenträgers zu schließen.

Aus der EP 0 355 412 A1 ist ein Verfahren bekannt, bei dem das verdickte Ende des Borstenbüschels und/oder der Rand der Öffnung im Borstenträger erwärmt werden, wobei die Abmessungen und die Temperaturen so gewählt sind, dass nach dem Einstoßen des verdickten Endes der Rand der Öffnung einwärts drängt und so, ähnlich wie bei einer Schnappverbindung, das verdickte Ende umfasst und es formschlüssig aufnimmt.

Die EP 0 472 857 B1 schlägt vor, mit einem beheizten Stempel, der Stifte hat, in einen plattenförmigen Borstenträger aus Kunststoff einzudringen, sodass die Stifte die Öffnungen für die Aufnahme der Borstenbüschel bilden. Die Borstenbüschel werden dann in die eingeprägten, noch heißen Öffnungen eingedrückt und die Schmelze steigt um die Verdickung der Borstenbüschel herum auf. Eine Formplatte kann ferner gegen die Oberseite des Borstenträgers gedrückt werden, um die Schmelze noch zu formen. Dabei ist es besonders bevorzugt, dass auf der Oberseite des noch nicht umgeformten Borstenträgers Fortsätze oder Wülste abstehen, die Material bilden, welches als Material zur Verfügung steht, das in Richtung Öffnung gedrückt wird.

Beim Verfahren nach der DE 34 22 623 A1 wird ein Borstenträger, der plattenförmig und ohne Öffnungen ausgeführt ist, mit Borstenbüscheln verschweißt, die aus demselben Kunststoff wie der Borstenträger bestehen. Ein Heizwerkzeug wird zwischen die noch nicht miteinander verschweißten Seiten des Borstenträgers und der Borstenbüschel gefahren, sodass beide aufgeschmolzen werden. Anschließend werden die Borstenbüschel in das aufgeschmolzene Material des Borstenträgers gedrückt. Ein sehr ähnliches Verfahren zeigt die US 4 132 449 A.

Die EP 2 078 472 A1 beschreibt, dass die Borstenbüschel durch die Öffnungen im Borstenträger durchgeführt werden und dann gegenüber der Rückseite des Borstenträgers vorstehen. Die vorstehenden Büschelenden werden geschmolzen, so dass die Borsten miteinander verbunden werden. Es ergibt sich eine Art Kunststoffplatte an der Rückseite aus dem geschmolzenen Material der Borstenbüschel, die damit an dem Borstenträger gegen Herausziehen befestigt sind. Rückseitig muss dann diese erzeugte Kunststoffplatte abgedeckt werden.

Aufgabe der Erfindung ist es, ein deutlich einfacheres Verfahren zum Herstellen einer Bürste zu schaffen, das vor allem auch vorrichtungsseitig weniger Aufwand bedarf, gleichzeitig aber für eine sichere Verankerung der Borste oder des Borstenbüschels in der Verankerungsöffnung sorgt.

Diese Aufgabe wird durch ein Verfahren zum Herstellen einer Bürste gelöst, die einen Borstenträger aus thermoplastischem Kunststoff mit einer Vorderseite und einer Rückseite und zumindest einer Verankerungsöffnung aufweist, in welche zumindest eine Borste aus thermoplastischem Kunststoff eingesetzt und darin ankerlos verankert wird, so dass sie von der Vorderseite des Borstenträgers absteht, gekennzeichnet durch folgende Schritte:
die wenigstens eine Borste wird in eine Aufnahmeöffnung eines Werkzeugteils aufgenommen,
die wenigstens eine Borste wird mit ihrem Befestigungsende, während sie noch in der Aufnahmeöffnung sitzt, in eine beim Herstellen des Borstenträgers gebildete Verankerungsöffnung im Borstenträger geschoben,
der Abstand des Werkzeugteils zum Borstenträger wird reduziert, sodass das Werkzeugteil den Borstenträger kontaktiert,
die Vorderseite des Borstenträgers wird auf eine Temperatur gebracht, die unterhalb der Schmelztemperatur des Borstenmaterials und/oder des Borstenträgermaterials liegt, insbesondere höchstens 85 % in °C der jeweiligen Schmelztemperatur des Borsten- und/oder des Borstenträgermaterials beträgt,
das Werkzeugteil übt eine Druckkraft auf den erwärmten Borstenträger aus und verformt den Borstenträger zumindest im Bereich des die Verankerungsöffnung umgebenden Randes unter Reduzierung des Querschnittes der Verankerungsöffnung derart, dass die zumindest eine Borste in die Verankerungsöffnung eingebettet und verankert ist,
der Abstand des Werkzeugteils zum Borstenträger wird vergrößert, sodass die zumindest eine Borste aus der Aufnahmeöffnung gezogen wird, und
die Rückseite des Borstenträgers wird, während die Druckkraft auf den Borstenträger ausgeübt wird, aktiv gekühlt.

Aufgrund des Aufheizens kann möglicherweise eine Halterung, welche den Borstenträger aufnimmt, im Betrieb beispielsweise durch Strahlung erwärmt werden. Ferner kann die Zeit, in der Druckkraft auf den Borstenträger ausgeübt wird, so lange sein, dass der Borstenträger tiefer und entfernter von der Vorderseite zu stark erwärmt wird und damit in diesen tieferen Bereichen auch umgeformt wird, wie umfangreiche Versuche gezeigt haben. Um dies zu verhindern wird gemäß der Erfindung die Rückseite des Borstenträgers, während die Druckkraft auf den Borstenträger ausgeübt wird, aktiv gekühlt. Es ist also eine separate Kühleinrichtung, beispielsweise durch eine Flüssigkeitskühlung, vorgesehen. Damit wird der Volumenbereich des Borstenträgers, in welchem eine ausreichend hohe Temperatur zur Umformung während des Aufbringens von Druck herrscht, in engeren Grenzen einstellbar. Zudem wird durch die Kühleinrichtung eine Sicherheitszone innerhalb des Borstenträgers geschaffen, in der keine Verformung stattfindet.

Die Erwärmung des Borstenträgers auf der Vorderseite erfolgt vorzugsweise durch das Werkzeugteil, welches aufgeheizt wird. Wenn, wie in der bevorzugten Variante der Fall, die Stirnseite des Werkzeugteils die Vorderseite über einige Sekunden kontaktiert, entspricht die Temperatur der Stirnseite des Werkzeugteils auch der Temperatur auf der Vorderseite des Borstenträgers, sodass sich die Temperaturen entsprechen. Das bedeutet, die Stirnseite des Werkzeugteils wird auf eine Temperatur gebracht, die unterhalb der Schmelztemperatur des Borstenmaterials und/oder des Borstenträgermaterials liegt, insbesondere höchstens 85 % in °C der jeweiligen Schmelztemperatur des Borsten-und/oder des Borstenträgermaterials beträgt.

Die obigen Verfahrensschritte laufen zwar vorzugsweise in der obigen Reihenfolge ab, das ist aber nicht zwingend notwendig. Beispielsweise könnte die Vorderseite des Borstenträgers auch zuerst aufgeheizt werden und anschließend der Abstand des Werkzeugteils zum Borstenträger reduziert werden, oder beide Schritte können gleichzeitig oder teilweise gleichzeitig ablaufen.

Die Abstandsänderung erfolgt durch eine Relativbewegung des Werkzeugteils zum Halteteil, d.h. das Werkzeugteil kann bewegt werden, hierzu steht das Halteteil still, oder umgekehrt, oder Werkzeugteil und Halteteil bewegen sich beide.

Wenn nachfolgend von "zumindest einer Borste" gesprochen wird, so bedeutet dies, dass damit sowohl eine einzige Borste, die in einer Aufnahmeöffnung und einer Verankerungsöffnung sitzt, Borsten eines einzigen Borstenbüschels, die in einer Aufnahmeöffnung und einer Verankerungsöffnung sitzen, als auch mehrere Borstenbüschel, die in ihren Aufnahmeöffnungen und Verankerungsöffnungen sitzen, gemeint sind, sodass die Erfindung nicht nur auf die Verankerung einer singulären Borste oder voneinander beabstandeter, singulärer Borsten beschränkt ist. Auch wenn nachfolgend an einigen Stellen die Borstenbüschel zur leichteren Lesbarkeit ergänzend erwähnt sind, so ist die Erfindung generell für einen Borstenträger mit einer oder mehreren einzelnen Borsten als auch für einen Borstenträger mit einem oder mehreren Borstenbüscheln oder Kombinationen hiervon einsetzbar. Das betrifft darüber hinaus sowohl die Verfahrensansprüche als auch die Sachansprüche.

Der Borstenträger mit seiner Verankerungsöffnung ist ein vorgefertigtes Spritzgussteil, sodass er sehr einfach herzustellen ist und keiner Bearbeitung bedarf. Die Verankerungsöffnungen werden vorzugsweise bereits beim Spritzgießen hergestellt.

Nachfolgend werden mehrere Verbesserungen, die für sich Erfindungen darstellen, beschrieben, welche aber auch in Kombination miteinander Optimierungen darstellen. Zu betonen ist, dass die später noch erläuterte Vorrichtung auch mit den im Zusammenhang mit dem Verfahren beschriebenen Merkmalen versehen sein kann, wobei lediglich die Steuerung entsprechend programmiert ist.

Während des Aufbringens der Druckkraft wird die Rückseite des Borstenträgers aktiv gekühlt. Vorzugsweise wird dabei sichergestellt, dass der Borstenträger im Prozess maximal 25 °C warm wird.

Die schon erwähnte Halterung, über die rückseitig eine Gegenkraft auf den Borstenträger ausgeübt wird und an der der Borstenträger anliegt, wird aktiv gekühlt, insbesondere über eine Flüssigkeitskühlung.

Die Kühlung kann nicht nur an der Rückseite des Borstenträgers erfolgen, sondern optional auch zumindest an Abschnitten der sogenannten Seitenfläche des Borstenträgers. Die Seitenfläche ist diejenige Fläche, die die Vorderseite und die Rückseite des Borstenträgers verbindet. Durch die Kühlung wird ausgeschlossen, dass die Seitenfläche, wenn der Borstenträger zwischen Vorderseite und Rückseite gequetscht wird, seitlich nach außen plastisch umgeformt wird. Hierzu kann beispielsweise die Halterung eine Aufnahmevertiefung für den Borstenträger haben, die komplementär zum Borstenträger ausgebildet ist und eine Anlage der Rückseite und der Seitenfläche an der Halterung sicherstellt.

Die Druckkraft wird in einer Vorrichtung aufgebracht, wenn der Borstenträger vorderseitig durch ein Werkzeugteil und rückseitig durch eine Halterung kontaktiert wird, während die Druckkraft auf den Borstenträger ausgeübt wird. Insbesondere wird die Vorrichtung zum Aufbringen der Druckkraft auf Block gefahren. Das bedeutet, es gibt keinen Abstand zwischen der Halterung und dem Werkzeugteil, denn diese kontaktieren sich stirnseitig. Bevorzugt erfolgt dieser Kontakt vollflächig und um den eingeschlossenen Borstenträger herum in einer Trennebene zwischen Halterung und Werkzeugteil. Damit ist die Kavität, die zwischen der Halterung und dem Werkzeugteil zur Aufnahme des Borstenträgers gebildet ist, in der Trennebene abgedichtet. Hier kann kein Material des Borstenträgers in einen Spalt hinein wandern, um dann einen Grat am fertigen Borstenträger zu bilden.

Wie sich überraschenderweise bei Versuchen herausgestellt hat, kann die Stabilität und Genauigkeit des Borstenträgers und der Ausrichtung der zumindest einen Borste, insbesondere der Borsten eines Borstenbüschels, erhöht werden, wenn nach der sogenannten Einwirkzeit (Zeit, während der der Druck auf den Borstenträger zwischen Vorderseite und Rückseite ausgeübt wird) die Vorrichtung nicht sofort auseinandergefahren und der Borstenträger entfernt wird. Obwohl dies bezüglich der Taktzeit sehr nachteilig ist, wird nach der Einwirkzeit zwischen der Vorderseite und dem Werkzeugteil ein Lüftungsspalt erzeugt. Das bedeutet, Werkzeugteil und Halterung werden voneinander geringfügig entfernt. Dabei wird die Vorrichtung nicht komplett auseinander gefahren auch nicht in eine Stellung gebracht, in der der Borstenträger entfernt wird oder entfernt werden könnte. Es wird eine Ruhephase für den Borstenträger samt seiner zumindest einen Borste, vorzugsweise ein oder mehrere Borstenbüschel, zwischengeschaltet, in der der Lüftungsspalt in der Vorrichtung zur Kühlung der Vorderseite wirkt. In dieser Ruhephase kontaktiert die Rückseite gegebenenfalls, je nach Form der Halterung, auch die Seitenfläche weiterhin die Halterung, was sich formstabilisierend auswirkt.

Die vorgegebene Ruhephase sollte wenigstens 1 Sekunde, insbesondere wenigstens 1,5 Sekunden dauern. Bevorzugt erfolgt während dieser Zeit keine weitere Bewegung zwischen der Halterung und dem Werkzeugteil. Alternativ kann eine langsame Öffnungsbewegung erfolgen.

Besonders vorteilhaft ist es, wenn die zumindest eine Borste, insbesondere das oder die Borstenbüschel während dieser gesamten Ruhephase in ihrer zugeordneten Aufnahmeöffnung bleibt/bleiben. Die Aufnahmeöffnung hält die Borste oder die Borsten eines oder mehrerer Borstenbüschel während der Ruhephase in Form. Damit stabilisiert sich der Bereich um die Verankerungsöffnung herum. Offensichtlich werden innere Spannungen abgebaut.

Der Lüftungsspalt sollte eine Höhe von wenigstens 1 mm haben, die in Verfahrrichtung der Vorrichtung (Bewegungsrichtung zwischen Halterung und Werkzeugteil beim Auf- und Zufahren der Vorrichtung) gemessen wird.

Wie bereits erwähnt kann der Lüftungsspalt vorzugsweise während der Ruhephase konstant gehalten werden.

Optional kann über den Lüftungsspalt Kühlluft zur Vorderseite des Borstenträgers geblasen werden. Damit lässt sich die Ruhephase zeitlich verkürzen.

Eine weitere Besonderheit der Erfindung besteht darin, dass nach einer Zustellbewegung von Werkzeugteil und Borstenträger relativ zueinander, die mit Erreichen einer Schließstellung der Vorrichtung beendet ist, die Druckkraft über eine vorgegebene Haltezeit in der Schließstellung auf den Borstenträger ausgeübt wird. Trotz der Bestrebung, die Taktzeiten möglichst gering zu halten, wird gemäß dieser Besonderheit der Erfindung also die Vorrichtung nicht zu gefahren und sofort wieder geöffnet, wie dies beim Pressen, Umformen oder Stanzen von Gegenständen üblicherweise der Fall ist. Die Druckkraft muss während der Haltezeit nicht konstant sein, denn sie hängt vom Widerstand des Borstenträgers ab. Mit zunehmender Verformung des Borstenträgers wird somit die Druckkraft abnehmen.

Die Haltezeit sollte wenigstens 1 Sekunde, vorzugsweise wenigstens 1,5 Sekunden betragen.

Als maximale Haltezeiten haben sich 3 Sekunden, insbesondere maximal 2,5 Sekunden als optimal herausgestellt. Mehr ist nicht erforderlich.

Der Borstenträger kann während der Haltezeit, insbesondere während der gesamten Haltezeit, optional aber auch bereits während der Zustellbewegung auf der Vorderseite aufgeheizt werden. Wenn während der Zustellbewegung bereits aufgeheizt wird, lässt sich Taktzeit sparen. Auch während der Zustellbewegung kommt es nämlich schon zu einer Erwärmung der Vorderseite, beispielsweise durch Strahlung. Sobald dann die Vorderseite das beheizte Werkzeugteil kontaktiert, werden während des nachfolgenden Schließens der Vorrichtung die Vorderseite und der Borstenträger aufgeheizt und auf Temperatur gebracht.

Die Einwirkzeit von Druck auf den Borstenträger bestimmt sich aus der Summe von Haltezeit plus demjenigen Zeitabschnitt während der Zustellbewegung, in welchem die Vorderseite erstmals vom Werkzeugteil und gleichzeitig die Rückseite von der Halterung kontaktiert und bis zum Erreichen der komplett zusammengefahrenen Stellung komprimiert wird. Diese Einwirkzeit sollte wenigstens 4 Sekunden, insbesondere wenigstens 5 Sekunden betragen.

Als maximale Einwirkzeit haben sich 15 Sekunden, insbesondere maximal 10 Sekunden als Grenze herausgestellt.

Die Haltezeit ist dabei vorzugsweise geringer als der obige Zeitabschnitt beim Zusammenfahren, in der der Borstenträger zusmmengedrückt wird. Dieses Zusammenfahren und Komprimieren erfolgt mit sehr langsamer Zustellgeschwindigkeit der Halterung relativ zum Werkzeugteil. Insbesondere ist dieser Zeitabschnitt mindestens 3, insbesondere mindestens 4 Sekunden.

Versuche haben gezeigt, dass die Haltezeit maximal 50%, insbesondere maximal 40% des obigen Zeitabschnitts beim Zusammenfahren ist, während dem der Borstenträger komprimiert wird.

Um die Taktzeit zu reduzieren kann es sinnvoll sein, die Vorderseite des Borstenträgers bereits durch andere Maßnahmen und nicht nur ausschließlich durch Kontakt mit dem Werkzeugteil zu erwärmen. Der Borstenträger kann vorgeheizt werden. Beispielsweise könnte der Borstenträger, wenn er bereits in der Halterung sitzt, an seiner Vorderseite mit Warmluft angeblasen werden oder kurzzeitig einer Wärmequelle (z.B. Strahlungswärme) ausgesetzt werden, die nicht das Werkzeugteil bildet. Dies kann während der Zustellbewegung von Werkzeugteil zu Halterung oder auch zeitlich vor dieser Zustellbewegung stattfinden. So könnte zum Beispiel während einer Verstellbewegung der Halterung/des Werkzeugteils oder bevor das Werkzeugteil seitlich an die Halterung herangefahren wird, der Borstenträger angewärmt werden. Die nachfolgende Aufheizzeit durch Kontakt mit dem Werkzeugteil kann dadurch reduziert werden.

Eine weitere Besonderheit der Erfindung besteht darin, dass das freie Ende der zumindest einen Borste in der Vorrichtung stirnseitig abgestützt wird. Diese Abstützung soll die axiale Lage der Borste oder der Borsten einer oder mehrerer Borstenbüschel innerhalb desselben Borstenbüschels oder von Borstenbüscheln zueinander festlegen. Bei mehreren Borstenbüscheln soll die Bürste beispielsweise von der Seite gesehen eine Sägezahnform an den Enden der Borstenbüschel haben. Andere Optionen bestehen darin, dass ein Borstenbüschel sägezahnförmig, spitz zulaufend oder konisch zulaufend ist.

Zu erwarten wäre, dass diese Abstützung, die als Anschlag oder Mittel zur Formgebung dient, auch während des Aufbringens der Druckkraft auf den Borstenträger wirken sollte, um während dieser Zeit keine Verschiebung der Borste, Borsten oder Borstenbüschel zu erlauben. Jedoch hat sich herausgestellt, dass es vorteilhaft ist, die Abstützung zumindest während des Aufbringens der Druckkraft auf den Borstenträger, vorzugsweise noch vor dem Aufbringen der Druckkraft oder während der Zustellbewegung der Vorrichtung nach Kontaktierung der Vorderseite und der Rückseite des Borstenträgers durch Werkzeug bzw. Halterung bereits zu entfernen. Das bedeutet, wenigstens die letzte Phase während des Aufbringens der Druckkraft, optional auch während der gesamten Zeit des Aufbringens der Druckkraft, ist die zuvor eingesetzte Abstützung entfernt. Der minimale Druck, der durch die Abstützung zumindest in der letzten Phase oder auch der gesamten Phase des Verformungsprozesses in die Borsten eingeleitet wird, kann zur Verformung der Borsten führen oder dazu, dass die Borsten schief stehen oder nicht parallel zueinander ausgerichtet sind, auch nicht innerhalb eines Borstenbüschels.

In diesem Zusammenhang kann es sinnvoll sein, dass der Querschnitt der zumindest einen Borste und der Querschnitt der zugeordneten Aufnahmeöffnung im Werkzeugteil so aufeinander abgestimmt sind, dass die zumindest eine Borste/das zumindest eine Borstenbüschel in der Aufnahmeöffnung geklemmt ist und durch die Klemmung axial positionierbar ist. Wenn also die Borste oder Borsten eines Borstenbüschels axial ausgerichtet sind, sind sie in der Aufnahmeöffnung geklemmt und damit axial positioniert. Natürlich ist diese Klemmung nur eine minimale Klemmung, die ein Verschieben generell im vorher stattfindenden axialen Aussichtsprozess erlaubt. Durch das Eigengewicht der Borste/des Borstenbüschels oder auch durch die Trägheit während der Bewegungen der Vorrichtung erfolgt jedoch keine selbsttätige, ungewollte Verschiebung der Borste/des Borstenbüschels in der Aufnahmeöffnung.

Ähnlich wie dies beim in der Praxis verwendeten ankerlosen Befestigen der Fall ist, kann die zumindest eine Borste oder das gesamte Borstenbüschel durch thermisches Umformen des Borstenmaterials ein verdicktes Befestigungsende bekommen, indem es über die Schmelztemperatur erwärmt wird. Bei Verwendung eines Borstenbüschels werden die Borsten des Borstenbüschels durch thermisches Umformen miteinander vereinigt. Dabei werden aber nicht auch noch benachbarte Borstenbüschel miteinander vereinigt, sondern jedes Borstenbüschel hat für sich ein verdicktes Befestigungsende, mit dem voraus es in die Verankerungsöffnung eingeführt wird.

Durch die Erfindung lassen sich nicht nur Borstenbüschel in der Verankerungsöffnung durch Umformen des Randes der Öffnung befestigen, sondern auch vorgefertigte sogenannte elastomere Reinigungselemente (z. B. aus thermoplastischen Kunststoffen), die mehrfach dicker sind als normale Filamente von Borstenbüscheln. Diese Reinigungselemente dienen der Verbesserung der Reinigung als auch, bei einer Zahnbürste, der Massage des Zahnfleisches. Ferner müssen diese Reinigungselemente nicht zwingend eine Stiftform besitzen, sondern können beliebige Querschnitte haben, insbesondere längliche, bogenförmige, kreuzförmige oder runde (kreisrunde oder ovale) Formen sowie entsprechende Ringformen mit mittigen Öffnungen.

Die zumindest eine Verankerungsöffnung kann mit einer singulären, vorgefertigten Borste aus einem Elastomermaterial, insbesondere thermoplastischem Elastomer (TPE), befüllt werden. Diese singuläre Borste wird in der Verankerungsöffnung durch das Verformen des Borstenträgers verankert.

Vorzugsweise besitzt die singuläre, vorgefertigte Borste eine größte Wanddicke, im Querschnitt gemessen, von größer als 0,6 mm, insbesondere größer 0,9 mm. Beispielsweise wird bei einer rechteckigen Querschnittsform die größte Wanddicke in Längsrichtung gemessen.

Optional kann die singuläre, vorgefertigte Borste ein verdicktes Befestigungsende haben, mit dem es in die Verankerungsöffnung hineingeschoben wird und welches vom umgeformten Rand der Verankerungsöffnung des Borstenträgers umgriffen wird. Das verdickte Befestigungsende wird bei der Herstellung der singulären Borste erzeugt und nicht etwa durch das Eindrücken und elastische Verformen der Borste durch das Umformen des Randes der Verankerungsöffnung. Alternativ jedoch wäre es möglich, ohne ein verdicktes Befestigungsende zu arbeiten, wenn die Borste nämlich dick genug ist und der Rand in die elastische Borste hineingedrückt wird, sodass sich dann das Befestigungsende durch das verdrängte Material verdickt.

Das verdickte Befestigungsende hat beispielsweise die Form eines flachen Zylinders und/oder die singuläre, vorgefertigte Borste ist ein Mehrkomponenten-Spritzgussteil. In diesem Zusammenhang kann das verdickte Befestigungsende aus einem anderen, vorzugsweise härteren Material, beispielsweise Polypropylen, als zumindest die Außenoberfläche der singulären, vorgefertigten Borste außerhalb der Verankerungsöffnung sein. Vorzugsweise ist das Befestigungsende sogar härter als der gesamte Rest der singulären, vorgefertigten Borste. Durch das härtere Befestigungsende ist der Sitz der Borste in der Verankerungsöffnung besser.

Üblicherweise sind mehrere Verankerungsöffnungen im Borstenträger vorgesehen, wobei mindestens eine, vorzugsweise mehrere Verankerungsöffnungen nur mit der/den singulären, vorgefertigten Borsten versehen sind. Mindestens eine andere, vorzugsweise die übrigen Verankerungsöffnungen sind hingegen mit vorgefertigten Borstenbüscheln versehen, sodass die Bürste eine Mischform aus herkömmlichen Borstenbüscheln und dickeren, elastomeren Reinigungselementen aufweist.

Die singuläre Borste ragt in Seitenansicht gesehen mit ihrem freien Ende beispielsweise zumindest bis zum freien Ende des Borstenbüschels, ist also nicht kürzer als die Borstenbüschel. Es kann von Vorteil sein, wenn die elastomeren Reinigungselemente, d.h. die singulären Borsten sogar länger sind als Borstenbüschel und vorderseitig über deren Enden hinaus ragen. Natürlich können die elastomeren Reinigungselemente auch kürzer als die Borstenbüschel sein.

Eine weitere Besonderheit der Erfindung besteht darin, dass die Wand, die die Verankerungsöffnung im Borstenträger definiert, nach dem Verformen nur abschnittsweise an dem in der Verankerungsöffnung liegenden Befestigungsende der zumindest einen Borste oder zumindest eines gesamten Borstenbüschels anliegt. Das Befestigungsende kann dabei beispielsweise auch ein verdicktes Ende sein oder das verdickte Befestigungsende eines Borstenbüschels, in welchem die Borsten einstückig ineinander übergehen. Zu erwarten wäre, dass die gesamte Verankerungsöffnung möglichst straff und spaltfrei an dem Befestigungsende anliegt, um keinerlei Bewegung der Borste oder des Borstenbüschels in jede Richtung zu erlauben. Die Erfindung geht jedoch einen anderen Weg. Das Befestigungsende wird nicht komplett zusammengedrückt, sondern hat gewisse Freiräume innerhalb der Verankerungsöffnung. Dadurch wird die Lage der zumindest einen Borste, insbesondere jedoch der Borsten innerhalb eines Borstenbüschels genauer einstellbar. Wenn beispielsweise das verdickte Ende eines Borstenbüschels komplett komprimiert wird, so versuchen die Borsten, sich voneinander weg zu spreizen und haben nicht mehr die zueinander parallele Ausrichtung.

Beispielsweise sollte die Verformung nur im Bereich des Randes der Verankerungsöffnung, d.h. im Bereich desjenigen Wandabschnitts, der im Bereich der Mündung der Verankerungsöffnung liegt, erfolgen.

Bezogen auf die fertige Bürste klemmt die Wand der Verankerungsöffnung über eine Tiefe von wenigstens 0,8 mm das Befestigungsende der Borste oder des zumindest einen gesamten Borstenbüschels nicht und/oder verformt das Befestigungsende auch nicht. Dieser Bereich, in dem keine Klemmung und/oder keine Verformung des Befestigungsendes erfolgt, beginnt mit dem Boden der Verankerungsöffnung und erstreckt sich weiter über die wenigstens 0,8 mm in Richtung zur Vorderseite des Borstenträgers.

Es kann sogar ein Luftspalt zwischen der Wand und der zumindest einen Borste/des Borstenbüschels vorhanden sein, insbesondere im Bereich des Bodens oder angrenzend an den Boden der Verankerungsöffnung.

Wie bereits zuvor erwähnt kann die zumindest eine Borste oder das zumindest eine, gesamte Borstenbüschel ein verdicktes Befestigungsende haben. Der Rand der Verankerungsöffnung wird verformt, also der Bereich der Wand, der im Bereich der Mündung zur Vorderseite liegt. In diesem Bereich wird der Rand so verengt, dass sich die Verankerungsöffnung in Richtung zum Boden aufweitet und das verdickte Befestigungsende in Auszugsrichtung vom verformten Rand hintergriffen wird, sodass ein Herausziehen der Borste/des Borstenbüschels durch den als Anschlag wirkenden Rand verhindert wird.

Im Hinblick auf die Genauigkeit der Ausrichtung der Borste oder der Borsten eines Borstenbüschels, die zuvor schon erwähnt wurde, kann das verdickte Befestigungsende beginnend von seinem der Vorderseite des Borstenträgers nahen Ende in axialer Richtung zur Rückseite hin nur über maximal 50 % seiner axialen Gesamtlänge in der Verankerungsöffnung geklemmt sein. Ist beispielsweise das Befestigungsende eine Kugel, wie sie üblicherweise beim Verschmelzen der Borstenenden erzeugt wird, so wird maximal nur diejenige Hälfte der Kugel in der Verankerungsöffnung geklemmt, die in Richtung zur Vorderseite weist.

Der durch die Verformung gebildete eingeengte "Hals" der Verankerungsöffnung nahe der Mündung, d.h. der das verdickte Befestigungsende hintergreifende, verformte Rand der Verankerungsöffnung kann beispielsweise eine axiale Erstreckung (axial bedeutet im Zusammenhang mit der Erfindung immer in Richtung von der Vorderseite bis zur Rückseite oder von der Rückseite zur Vorderseite) von 0,5-1,3 mm, insbesondere 0,6-0,9 mm haben. Dies ist eine extrem geringe Höhe.

Die durch die Erfindung hergestellten Bürsten, insbesondere Zahnbürsten, können aufgrund der Erfindung eine sehr geringe Dicke im Bereich des Borstenträgers haben. Während bisher Zahnbürsten im Bereich des Kopfes eine Dicke von über 4 mm besitzen, wird durch die Erfindung eine Dicke von unter 4 mm ermöglicht, bei besseren Haltekräften für die Borsten oder Borstenbüschel als im Stand der Technik. Ferner ist es aufgrund der Erfindung möglich, Borstenbüschel, auch größere Borstenbüschel, bis sehr nahe an den Rand der Vorderseite zu positionieren, was bislang nicht möglich war.

Borstenbüschel können durch Verformen des Randes der Verankerungsöffnung auch noch im Querschnitt verengt werden. Das bedeutet, ein Borstenbüschel wird in der Verankerungsöffnung befestigt, und der Rand der Verankerungsöffnung wird so verformt, dass der Rand das Borstenbüschel in einem Bereich, in dem die Borsten nebeneinanderliegen, verdichtet. Der Bereich, in dem die Borsten nebeneinander liegen, grenzt vorzugsweise unmittelbar an das Befestigungsende an, das durch die verschmolzenen Borsten gebildet ist. Das Borstenbüschel erhält somit einen geringeren Querschnitt nach dem Verformen und Verengen der Verankerungsöffnung als es zuvor noch nach dem Einsetzen des Borstenbüschels in die Verankerungsöffnung hatte.

Vorzugsweise ist vorgesehen, dass das Borstenbüschel um wenigstens 3 %, insbesondere wenigstens 5 % verdichtet wird. Diese Verdichtung wird durch den Unterschied des Querschnitts, genauer gesagt den Unterschied der Querschnittfläche, der Aufnahmeöffnung im Werkzeugteil zum Querschnitt der verformten Verankerungsöffnung im Bereich des Randes, d.h. der Mündung der Verankerungsöffnung zur Vorderseite, definiert.

Der Querschnitt wird bei Zahnbürsten jedoch beispielsweise lediglich um maximal 0,4 mm reduziert.

Vorzugsweise hat die Verankerungsöffnung vor ihrem Verformen lediglich seitlich ein Übermaß von weniger als 0,2 mm gegenüber dem größten Querschnitt des Befestigungsendes des Büschels/der Borste, um das Einschieben des Befestigungsendes in die Verankerungsöffnung ohne Kraftaufwand zu ermöglichen. Nach dem Verformen ergibt sich ein Formschluss durch den verengten Rand der Verankerungsöffnung, bei dem der Rand nur um 0,1-0,3 mm im Querschnitt enger sein kann, als der größte Querschnitt des Befestigungsendes. Dieser minimale Überstand reicht aus, um hervorragende Auszugswerte zu realisieren.

Die Erfindung ermöglicht auch, Borstenträger mit rückseitig bereits aufgespritzten Elastomeren zu verarbeiten. Das Elastomer ist also bereits auf die Rückseite des Borstenträgers aufgespritzt, wenn die Borste/das Borstenbüschel vorderseitig in die Verankerungsöffnung eingeführt wird. Die Halterung, in der der Borstenträger beim Aufbringen der Druckkraft aufgenommen ist, hat eine Ausnehmung. Diese Ausnehmung ist so ausgebildet, dass sie den Borstenträger rückseitig samt Elastomer aufnimmt. Die Ausnehmung kann insbesondere komplementär zur Form des mit der Umspritzung versehenen Borstenträgers ausgebildet sein. Da das Elastomer bei Zahnbürsten meist als Zungenreiniger mit vorstehenden Noppen ausgeführt ist, hat die Halterung entsprechend komplementär ausgebildete Vertiefungen für diese Noppen.

Vorzugsweise ist jedoch die Tiefe der Ausnehmung so ausgeführt, dass ihr Volumen für die Aufnahme des Elastomers kleiner ist als das unkomprimierte Volumen des Elastomers. Damit wird das Volumen in der Aufnahme dem tatsächlichen Volumen des komprimierten Elastomers bei Aufbringen der Druckkraft zum Verformen des Randes der Verankerungsöffnung angepasst. Da das Elastomer weicher ist als der Borstenträger muss verhindert werden, dass die Druckkraft durch das zwischengeschaltete Elastomer zu gering wird.

Die beim Verformen von der Halterung aufgebrachte Gegenkraft kann vollständig über das Elastomer in den vorderen Teil des Borstenträgers eingebracht werden. Es muss also nicht zwingend eine direkte Kontaktierung der Rückseite des Borstenträgers ohne Zwischenschaltung von Elastomer mit der Halterung stattfinden, um Gegenkräfte in den Borstenträger einzuleiten.

Die zuvor erwähnten vielfältigen Optionen des erfindungsgemäßen Verfahrens können folgende optimierte Schritte aufweisen:
das Werkzeugteil wird aufgeheizt, sodass die dem Borstenträger gegenüberliegende Stirnseite des Werkzeugteils auf eine Temperatur gebracht wird, die unterhalb der Schmelztemperatur des Borstenmaterials und/oder des Borstenträgermaterials liegt, insbesondere unterhalb von 85% in ° C der jeweiligen Schmelztemperatur des Borsten- und/oder des Borstenträgermaterials. Das Werkzeugteil wird relativ zum Borstenträger bewegt, sodass das Werkzeugteil den Borstenträger kontaktiert und ihn aufheizt.

Gemäß eines weiteren Aspekts wird das erfindungsgemäße Verfahren zum Herstellen einer Bürste, die einen Borstenträger mit zumindest einer Verankerungsöffnung und wenigstens einer in die Verankerungsöffnung eingesetzten und darin ankerlos verankerten Borste aufweist, wobei der Borstenträger und die wenigstens eine Borste aus einem thermoplastischen Kunststoff gebildet sind, der gleich oder verschieden sein kann, durch die folgenden Schritte weiter entwickelt:
eine dem Borstenträger gegenüberliegende Stirnseite des Werkzeugteils wird auf eine vorbestimmte Temperatur gebracht, die in einem Bereich von zwischen Umgebungstemperatur und 210 °C, insbesondere 150 °C, liegt;
das Werkzeugteil wird relativ zum Borstenträger bewegt, sodass das Werkzeugteil den Borstenträger kontaktiert und ihn auf die vorbestimmte Temperatur bringt, jedoch ohne den Borstenträger und die wenigstens eine Borste zu schmelzen.

Der thermoplastische Kunststoff ist bei allen Ausführungsformen bevorzugt aus der aus Polyester, insbesondere Polyethylenterephthalat (PET), vorzugsweise BR003, und Polybutylenterephthalat (PBT), Polypropylen (PP), Polycarbonat (PC), Polyamid (PA), Polyvinylacetat (PVA), Polyethylen (PE), Acrylnitril-Butadien-Styrol-Copolymer (ABS) und Styrol-Acrylnitril-Copolymer (SAN) bestehenden Gruppe ausgewählt. Es können sowohl Homopolymere als auch Copolymere mit den genannten thermoplastischen Kunststoffen eingesetzt werden.

Erfindungsgemäß sollen der Borstenträger und die wenigstens eine in das Werkzeugteil eingesetzte Borste nicht schmelzen, wenn das Werkzeugteil den Borstenträger kontaktiert. Die vorbestimmte Temperatur beträgt dazu vorzugsweise höchstens 85 % der Schmelztemperatur des thermoplastischen Kunststoffs. Damit kann eine Beschädigung der Borsten und/oder des Borstenträgers sicher verhindert werden.

Bevorzugt liegt die vorbestimmte Temperatur in einem Bereich zwischen 30 °C und 150 °C, besonders bevorzugt zwischen 60 °C und 140 °C, insbesondere zwischen 90 und 130 °C oder 100 und 115 °C.

Die vorbestimmte Temperatur liegt weiter bevorzugt oberhalb der Glasübergangstemperatur des thermoplastischen Kunststoffs. Damit ist eine hinreichende Verformbarkeit des thermoplastischen Kunststoffs gegeben.

Das erfindungsgemäße Verfahren unterscheidet sich grundlegend vom Stand der Technik, denn zum einen sieht es ausschließlich eine ankerlose Befestigung der Borste, des Borstenbüschels oder der Borstenbüschel vor. Die Verankerungsöffnung selbst ist vorgefertigt, das heißt, hier werden nicht mit aufgeheizten Stempeln Löcher in den Borstenträger eingedrückt, vielmehr ergeben sich die Aufnahmeöffnungen bereits beim Spritzgießen des Borstenträgers. Ferner wird auch nicht die Aufnahmeöffnung innenseitig zuerst erwärmt und damit der innenseitige Rand der Öffnung aufgeweicht, sodass die Borste oder das Borstenbüschel in die weiche Wand der Aufnahmeöffnung gedrückt wird. Vielmehr wird die Borste bzw. das oder die Borstenbüschel vorzugsweise zuerst in die Aufnahmeöffnung eingeschoben, und erst anschließend wird der Borstenträger auf seiner dem Werkzeugteil gegenüberliegenden Vorderseite aufgeheizt, ohne aber zu schmelzen. Es wird unterhalb der Schmelztemperatur des Borstenmaterials und/oder des Borstenträgermaterials gearbeitet, wobei die Aufheizung durch das Werkzeugteil, in dem die Borste oder das Borstenbüschel saß, erfolgt und nicht etwa durch ein eigenes reines Heizwerkzeug, welches dann wieder weggefahren werden muss, wenn die Borste oder das Borstenbüschel zugeführt wird. Ein solches Aufheizen durch das Werkzeugteil selbst, in dem die Borste oder das Borstenbüschel sitzt, ist im Stand der Technik deshalb weder angedacht noch durch ihn nahegelegt, weil das Borstenbüschel im Stand der Technik in die weiche, erhitzte Wand des Borstenträgers eindringen sollte und deshalb eine hohe Eigenstabilität aufweisen musste, um die auf das Borstenbüschel ausgeübte Einpresskraft weiterleiten zu können. Nur durch die auf das Borstenbüschel rückseitig ausgeübte Einpresskraft und durch die Eigensteifigkeit des kalten Borstenbüschels war es möglich, das Verankerungsende in die erweichte Wand des Borstenträgers zu drücken. Darüber hinaus erfolgt das Aufheizen durch Kontaktieren des Borstenträgers durch das heizende Werkzeugteil selbst und nicht, wie im Stand der Technik vorwiegend üblich, durch berührungsloses Aufheizen. Damit sind die Energieübergänge einerseits schneller erreichbar und andererseits ist die Vorrichtung mit weniger Teilen ausführbar.

Die Aufheizung des Borstenträgers während des gesamten Umformprozesses erfolgt auf eine Temperatur unterhalb der Schmelztemperatur, vorzugsweise auf eine Temperatur, die deutlich unterhalb der Schmelztemperatur liegt, beispielsweise mindestens 15 % unter der jeweiligen Schmelztemperatur gerechnet in ° C und vorzugsweise maximal 15 % über der Glasübergangstemperatur, gerechnet in ° K und bei einem Borstenträgermaterial mit einer Glasübergangstemperatur von größer gleich 300° K. Bei einem Borstenmaterial mit einer Glasübergangstemperatur von kleiner 300° K liegt die Temperatur, auf die der Borstenträger während des gesamten Umformprozesses erwärmt wird, maximal 50 % über der Glasübergangstemperatur in ° K gerechnet. Vorzugsweise wird der Borstenträger auf eine Temperatur über der Glasübergangstemperatur aufgeheizt.

Die Erfindung und ihre zuvor und anschließend beschriebenen vorteilhaften Varianten sehen insbesondere die Verwendung von Polypropylen, von dem einige Gruppen eine Glasübergangstemperatur von kleiner 300° K haben, andere Glasübergangstemperatur über 300° K besitzen, als Borstenträgermaterial vor. Andere bevorzugte Borstenträgermaterialien sind PET, PBT, PA, ABS, SAN und PC. Diese Borstenträgermaterialien haben allesamt Glasübergangstemperaturen von über 300° K.

Die Glasübergangstemperatur kann beispielsweise durch Dynamisch-Mechanische Thermoanalyse (DMTA) bestimmt werden. Als Schmelztemperatur wird bei teilkristallinen Thermoplasten das obere Ende des Schmelzbereichs angesehen. Eine Bestimmung der Schmelztemperatur kann beispielsweise durch Dynamische Differenzkalorimetrie (DSC) erfolgen. Bei amorphen Thermoplasten gilt der Übergang zum Fließ- oder Verarbeitungsbereich als Schmelztemperatur.

Damit die Taktung beim Herstellen von Borstenträgern relativ kurz ist, sieht eine Ausführungsform der Erfindung vor, dass das Werkzeugteil, bevor es den Borstenträger kontaktiert, aufgeheizt ist. Dies hat natürlich den Nachteil, dass die Borste oder das Borstenbüschel selbst dabei schon mit aufgeheizt wird, was im Stand der Technik nicht gewünscht war, denn das Borstenbüschel sollte sich ja in die weiche Wand eindrücken. Erfindungsgemäß kann das Werkzeugteil bereits auf seine vorbestimmte maximale Betriebstemperatur aufgeheizt sein, bevor es den Borstenträger kontaktiert.

Die Erfindung sieht unter anderem in einer Ausgestaltung der Erfindung vor, dass die Schmelztemperatur des Kunststoffs des Borstenträgers unterhalb der Schmelztemperatur der Borste bzw. Borsten liegt. Daneben gibt es aber auch Bürsten, bei denen das Borstenträgermaterial gleich dem Borstenmaterial ist, zum Beispiel Polypropylen und PA.

Wie bereits erläutert, sollte der Borstenträger erst nach dem Einbringen der zumindest einen Borste durch das Werkzeugteil erwärmt werden, und zwar vorzugsweise ausschließlich durch Kontaktierung. Natürlich kann, wenn ein Borstenträger in die Nähe eines warmen oder heißen Werkzeugteils kommt, eine minimale Temperaturerhöhung stattfinden, diese Temperaturerhöhung ist aber absolut vernachlässigbar und findet nur an der unmittelbaren Oberfläche statt.

Sollte jedoch die Zustellbewegung sehr lange dauern, ist es alternativ hierzu denkbar, dass das Werkzeugteil den Borstenträger im Bereich der Kontaktfläche mit dem Werkzeug während der Zustellbewegung des Werkzeugteils auf die Temperatur bringt, die unterhalb der Schmelztemperatur des Borstenträgermaterials und, vorzugsweise, größer gleich der Glasübergangstemperatur des Materials des Borstenträgers ist. Alternativ oder ergänzend kann auch bei Kontaktierung des Borstenträgers durch das Werkzeugteil der Borstenträger auf die vorgenannte Temperatur gebracht werden.

Die Aufheizung des Borstenträgers auf die vorbestimmte und zuvor erwähnte Temperatur oder Temperaturbereiche sollte gemäß einer Ausführungsform der Erfindung 0,25 bis 0,5 mm unter der dem Werkzeugteil zugewandten Oberfläche des Borstenträgers (Vorderseite) reichen, bis der Verformungsvorgang abgeschlossen ist. Da das Werkzeugteil über einen längeren Zeitraum gegen den Borstenträger drückt und ihn dabei aufheizt, wandert die Wärmeenergie auch tiefer in das Innere des Borstenträgers. Damit muss bei der ersten Kontaktierung des Borstenträgers durch das Werkzeugteil dieses nicht bereits in die Tiefe aufgeheizt sein, es reicht aus, diese Aufheizung während der Zustellbewegung und der Einwirkzeit (Kontaktzeit) zu erreichen.

Das Werkzeugteil kann in einer 1. Phase der Zustellbewegung relativ zum Borstenträger den Borstenträger zumindest im Bereich des die Verankerungsöffnung umgebenden Randes, vorzugsweise aber im gesamten Kontaktbereich, auf eine Temperatur erwärmen, die über einer Grenztemperatur liegt, welche 60 % in ° C, insbesondere 80 % der Glasübergangstemperatur des Borstenträgermaterials entspricht, wenn mit einem Borstenträgermaterial mit einer Glasübergangstemperatur von größer gleich 300° K gearbeitet wird. Dies betrifft insbesondere Borstenträgermaterialien wie Polypropylenvarianten mit einer Glasübergangstemperatur von größer gleich 300° K, PET, PBT, PA, ABS, SAN und PC. Alternativ ist die Grenztemperatur die Umgebungstemperatur, wenn mit einem Borstenträgermaterial gearbeitet wird, dessen Glasübergangstemperatur kleiner 300° K beträgt, was insbesondere bei Verwendung von Polypropylenvarianten mit solch niedrigen Glasübergangstemperaturen der Fall ist. Die Erwärmung erfolgt, bevor das Werkzeugteil in einer 2. Phase der Zustellbewegung den Rand verformt und der Rand gegen die zumindest eine Borste drückt.

Das Borstenträgermaterial kann insbesondere auf eine Temperatur erwärmt werden, die in einem Bereich zwischen der Glasübergangstemperatur und unterhalb von etwa 85 % % der Schmelztemperatur des Thermoplasten in ° C gerechnet liegt. Je nach dem verwendeten thermoplastischen Material liegt diese Temperatur vorzugsweise in einem Bereich von zwischen 30 °C und 210 °C, besonders bevorzugt zwischen 60 und 140 °C, vorzugsweise zwischen 90 und 130 °C oder 100 und 115 °C.

Wie sich bei Versuchen herausgestellt hat, sollte die Borste oder das Borstenbüschel zuerst in die Aufnahmeöffnung geschoben werden, bevor das Werkzeugteil den Borstenträger kontaktiert, insbesondere bevor der Borstenträger zumindest im Bereich des die Verankerungsöffnung umgebenden Randes (vorzugsweise im gesamten Kontaktbereich) auf eine Temperatur erwärmt wurde, welche über einer Grenztemperatur liegt, die 40 % in ° C, insbesondere 20 % in ° C unter der Glasübergangstemperatur des Borstenträgermaterials liegt, wenn mit einem Borstenträgermaterial mit einer Glasübergangstemperatur von größer gleich 300° K gearbeitet wird (dies betrifft insbesondere Borstenträgermaterialien wie Polypropylenvarianten mit einer Glasübergangstemperatur von größer gleich 300° K, PET, PBT, PA, ABS, SAN und PC), oder die der Umgebungstemperatur entspricht, wenn mit einem Borstenträgermaterial gearbeitet wird, dessen Glasübergangstemperatur kleiner 300° K beträgt, also insbesondere Polypropylenvarianten mit solch niedrigen Glasübergangstemperaturen. Der Rand der Verankerungsöffnung ist zumindest der Außenrand an der Vorderseite des Borstenträgers.

Eine andere Variante der Erfindung sieht vor, dass die zumindest eine Borste oder das Borstenbüschel zuerst in die Aufnahmeöffnung geschoben wird, bevor der Rand der Verankerungsöffnung auf eine Temperatur aufgeheizt ist, die zumindest 30 °C über der Umgebungstemperatur liegt, insbesondere bevor der Rand der Verankerungsöffnung im Inneren der Verankerungsöffnung über die Umgebungstemperatur durch das Werkzeugteil aufgeheizt ist. Das bedeutet, der Rand innerhalb der Öffnung wird bei letzterer Variante nicht merklich aufgeheizt, im Gegensatz zum Stand der Technik, wo beheizbare Stifte in die Öffnung eindringen sollten, um den innenseitigen Rand der Öffnung, das heißt die die Öffnung definierende Wand, bis zum Lochgrund zu erwärmen.

Die Verformung sollte derart sein, dass der Rand des Borstenträgers am Übergang zur Vorder- oder Stirnseite des Borstenträgers am gesamten Umfang gegen die außenliegenden Borsten des befestigten Borstenbüschels drückt, so dass eine Verdichtung des Borstenbüschels erfolgt. Natürlich hängt die Art oder der Umfang der Verdichtung von dem Querschnitt des Borstenbüschels ab. Bei Zahnbürsten wird der Querschnitt der Verankerungsöffnung beispielsweise um maximal 0,3 mm, vorzugsweise um maximal 0,15 mm reduziert.

Vorzugsweise bezieht sich die fehlende Aufheizung der Öffnungswand auch auf die übrigen Ausführungsformen. Das heißt, dass optional generell nur im Bereich der Vorderseite, also am Übergang der Vorderseite zur Verankerungsöffnung, der Rand auf die vorgegebenen Grenztemperaturen oder Temperaturen gebracht wird, in der Öffnung selbst bleibt jedoch die Umgebungstemperatur im Wesentlichen erhalten, solange das Werkzeugteil den Borstenträger nicht kontaktiert.

Eine bevorzugte Ausführungsform der Erfindung sieht vor, dass das Werkzeugteil im gesamten Kontaktbereich, in dem das Werkzeugteil den Borstenträger kontaktiert, auch aufgeheizt wird und nicht nur in dem punktuellen Bereich oder linienförmigen Bereich um den Rand der Verankerungsöffnung herum. Dies hat den Vorteil, dass das Werkzeugteil den gesamten Kontaktbereich und damit den gesamten angrenzenden Materialbereich des Werkzeugteils zur Verfügung hat, um diesen Materialbereich durch den hohen aufgebrachten Druck zu bewegen und umzuformen. Dabei ist es darüber hinaus vorteilhaft, wenn das Werkzeugteil sogar die gesamte dem Werkzeugteil zugewandte Stirnseite des Borstenträgers, also dessen Vorderseite, kontaktiert, zumindest aber wenigstens 70 % der Fläche der Vorderseite kontaktiert und mit Druck beaufschlagt. Im Stand der Technik wurde durch vorstehende Wülste am hergestellten Borstenträger eine Art Kragen geschaffen, der das einzige erhitzte und umgeformte Material darstellte. Die vorliegende Erfindung setzt sich hiervon jedoch deutlich ab, indem gerade die Abschnitte des Borstenträgers erwärmt und mit umgeformt werden, die entfernt vom stirnseitigen Rand der Verankerungsöffnungen liegen.

Die Rückseite des Borstenträgers sollte durch das Werkzeugteil während des Verankerns nicht erwärmt werden, sodass tatsächlich nur die Vorderseite, die dem Werkzeugteil zugewandt ist, erwärmt und umgeformt wird, wogegen die Rückseite eine plattenartige, stabile Struktur bildet, die als Basis des Borstenträgers bezeichnet werden könnte. Dieser Teil des Borstenträgers wird während der Druckbeaufschlagung folglich auch nicht umgeformt oder in seiner Gestalt geändert.

Das Werkzeugteil kann zumindest während der gesamten Zeit, in der es Druck auf den Borstenträger ausübt, den Borstenträger stirnseitig auch aufheizen. Es geht also bei der Erfindung nicht um ein kurzzeitiges Vorab-Aufheizen des Borstenträgers und ein anschließendes schnelles Bewegen der Borstenbüschel in die erwärmten Materialabschnitte des Borstenträgers, wie dies im Stand der Technik mit den vorab erhitzten Borstenträgern der Fall ist, in die dann Borstenbüschel eingestoßen werden.

Die bei der vorliegenden Erfindung eingesetzten Kunststoffe sind beispielsweise Copolyester, insbesondere Eastar^{™} BR003 (mit einem Schmelztemperaturbereich von 230 bis 280 °C), Polypropylene, insbesondere ein Homopolymer wie beispielsweise PPH5042 mit einer Schmelztemperatur von 165 °C, Polycarbonat, Polyamid, Polyvinylacetat oder Polyethylen. Sofern diese Materialien eine Glasübergangstemperatur über der Umgebungstemperatur, hier 300° K, haben, sollte über das Werkzeugteil Energie in den Borstenträger eingebracht werden. Dies ist auch vorteilhaft bei Materialien, deren Glasübergangstemperatur unterhalb der Umgebungstemperatur liegt. Jedoch ist es gemäß einer Variante der Erfindung bei solchen Materialien des Borstenträgers auch möglich, ohne eine Aufheizung des Borstenträgers durch das Werkzeugteil auszukommen. Dann wird bei der Umgebungstemperatur die Umformung ausschließlich über den Druck des Werkzeugteils auf den Borstenträger erreicht.

Vorteilhafter Weise werden Borstenträgermaterialien auf folgende Temperaturen bei dem erfindungsgemäßen Verfahren und durch die nachfolgend noch erläuterte erfindungsgemäße Vorrichtung erwärmt:

| Borstenträgermaterial | Schmelztemperatur [°C] | Glasübergangstemperatur [°C] | Prozesstemperatur [°C] |
|---|---|---|---|
| Polypropylen | 160°-170° | -10° - 0° | < 136° |
| PET | 260° | 70° | < 120° |
| PBT | 220° | 47° | < 95° |
| PA | 200° - 260° | 50 - 60° | < 98° |
| ABS | 220° - 250° | 95° | < 150° |
| PC | 220° - 230° | 148° | < 210° |
| SAN | 200° | 108° | < 165° |

Die Erfindung sieht insbesondere bei PET eine Erwärmung der Vorderseite des Borstenträgers in einem Bereich von 75-95 °C, insbesondere 80-90 °C und bei PP von 115 bis 125 °C, insbesondere 110-120 °C vor.

Insbesondere wird PP mit einem Melt-Flow-Index (MFI) von 6-35, vorzugsweise von 10-15 eingesetzt.

Das erfindungsgemäße Verfahren sieht in der bevorzugten Ausführungsform nicht nur eine Borste vor, die insgesamt in eine Aufnahmeöffnung eingesetzt wird, sondern mehrere Verankerungsöffnungen und mehrere Aufnahmeöffnungen im Borstenträger bzw. im Werkzeugteil. Die Aufnahmeöffnungen fluchten jeweils zu den zugeordneten Verankerungsöffnungen. In die Aufnahmeöffnungen werden Borstenbüschel eingesetzt, die dann in die Verankerungsöffnungen eingeschoben werden, vorzugsweise gleichzeitig eingeschoben werden. Das Werkzeugteil heizt gleichzeitig zumindest die Ränder der Verankerungsöffnungen auf, vorzugsweise die gesamte Kontaktfläche, sodass der gesamte Bereich zwischen den Verankerungsöffnungen erwärmt wird. Durch Ausübung von Druck auf die Vorderseite des Borstenträgers werden die Verankerungsöffnungen gleichzeitig geschlossen und dadurch die Borstenbüschel gleichzeitig verankert.

Vorzugsweise ist der Kontaktbereich zwischen Werkzeugteil und Borstenträger am Werkzeugteil eben, ebenso wie die Vorderseite des Borstenträgers, welche dem Werkzeugteil zugewandt ist.

Die Zustellbewegung des Werkzeugteils relativ zum Borstenträger kann druckund zeitgesteuert und/oder druck- und weggesteuert vollzogen werden.

Alternativ hierzu wird die Vorrichtung einfach auf Block gefahren, indem beispielsweise ein Elektromotor vorgesehen ist (zum Beispiel über einen Spindelantrieb), wobei die Stromaufnahme oder Leistungsaufnahme des Elektromotors detektiert wird und ab Erreichen einer vorgegebenen Grenze davon ausgegangen wird, dass die Vorrichtung in der Schließstellung ist, in welcher vorzugsweise die Halterung und das Werkzeugteil einander berühren. Ab diesem Zeitpunkt könnte dann die sogenannte Haltezeit laufen.

Der Begriff "Bewegung oder Zustellbewegung des Werkzeugteils relativ zum Borstenträger" bedeutet, dass eines der beiden Teile oder beide Teile relativ zueinander bewegt werden.

Eine weitere Variante der Erfindung sieht vor, dass das Werkzeugteil ab dem Zeitpunkt des Kontaktierens des Borstenträgers eine vorzugsweise konstant bleibende Druckkraft über eine vorgegebene Zeit auf den Borstenträger ausübt. Dieses optionale Verfahren ist besonders einfach zu realisieren, denn es wird einfach eine Druckkraft aufgebracht und eine Zeit lang auf den Borstenträger ausgeübt, sozusagen als Einwirkzeit, um anschließend Werkzeugteil und Borstenträger wieder voneinander zu entfernen. Weitere Verfahrensschritte sind auch hier, wie bei den übrigen Varianten der Erfindung, nicht erforderlich, um die Borste oder das oder die Borstenbüschel im Borstenträger zu verankern.

Die Zustellbewegung und/oder der aufgebrachte Druck vom Werkzeugteil relativ zum bzw. auf den Borstenträger kann ab der Kontaktierung des Borstenträgers durch das Werkzeugteil bis Erreichen des maximalen Zustellwegs nichtlinear über die Zeit verlaufen. Dadurch kann beispielsweise eine längere oder kürzere anfängliche Einwirkzeit der Temperatur realisiert werden, und anschließend wird dann ein anderer Druck ausgeübt, um das Borstenträgermaterial weiter und dauerhaft zu verformen.

Im Gegensatz zum zuvor erwähnten Stand der Technik kann das Befestigungsende der zumindest einen Borste oder des oder der gesamten Borstenbüschel beim Einschieben in die zugeordnete(n) Verankerungsöffnung(en) kleiner als der Querschnitt der Verankerungsöffnung, natürlich vor dessen Verformen und vor der Erwärmung des Borstenträgers, sein. Das bedeutet, das Borstenbüschel wird nicht in die seitliche Wand der Verankerungsöffnung eingedrückt, wie dies im Stand der Technik vorgeschlagen wurde. Das Befestigungsende wird auch nicht in den Boden der Verankerungsöffnung eingedrückt, denn dieser ist nicht oder nicht ausreichend erwärmt, um weich zu sein. Ferner wird auch keine Axialkraft auf die Borsten ausgeübt, die über die notwendige Kraft zum Herausschieben der Borsten aus der Aufnahmeöffnung hinausgeht.

Wichtig für das vorliegende Verfahren und ein großer Unterschied zum Stand der Technik ist die relativ lange Einwirkzeit des Werkzeugteils auf den Borstenträger, während der Druck auf den Borstenträger ausgeübt wird und dieser zusätzlich erwärmt wird. Die Einwirkzeit beträgt wenigstens 4 Sekunden, insbesondere wenigstens 5 Sekunden und maximal 15 Sekunden, insbesondere maximal 10 Sekunden. Über diese lange Einwirkzeit kann der Druck gleichbleibend sein und/oder eine permanente Erwärmung des Borstenträgers stattfinden. Die Verankerungsöffnung kann ein Sackloch sein, insbesondere mit einer Tiefe von maximal 4 mm, weiter insbesondere maximal 2,7 mm.

Dadurch, dass der Borstenträger im Bereich der Vorderseite verformt wird, wird die Dicke des Borstenträgers durch das erfindungsgemäße Verfahren reduziert.

Die Verankerungsöffnung wird nur bis zu einer Tiefe von maximal 85 %, insbesondere maximal 70 %, vorzugsweise sogar nur maximal 60 % ihrer Gesamttiefe umgeformt und verengt, das heißt, sie wird im Bereich des Bodens des Sacklochs nicht verengt.

Ein wesentlicher weiterer Unterschied zum Stand der Technik besteht auch im ausgeübten Druck, der erheblich höher ist als der in den bisher vorgeschlagenen Verfahren. Das Werkzeugteil bringt nämlich einen Druck von wenigstens 200 bar, insbesondere wenigstens 400 bar auf den Borstenträger auf.

Die zumindest eine Verankerungsöffnung, vorzugsweise sämtliche Verankerungsöffnungen haben vor der Beaufschlagung des Borstenträgers durch das Werkzeugteil im Bereich der Mündung der Verankerungsöffnung keinen vorstehenden Kragen, vielmehr sind diese Borstenträger an ihrer dem Werkzeugteil zugewandten Vorderseite eben, zumindest im Kontaktbereich mit dem Werkzeugteil. Der enorme Druck von 200 und mehr bar sorgt dafür, dass er gesamte Bereich der Oberfläche oder Kontaktfläche umgeformt wird und, bis auf die nachfolgend noch erläuterte Ausnahme bei einer schrägen Verankerungsöffnung, kein vorstehender Kragen als Materialanhäufung notwendig ist.

Sollte die Verankerungsöffnung in ihrem Inneren einen schräg zu ihrer dem Werkzeugteil gegenüberliegenden Vorderseite verlaufenden Randabschnitt aufweisen, kann an diesem Bereich eine zusätzliche Materialanhäufung notwendig sein. Dann besitzt der Borstenträger vor der Beaufschlagung des Borstenträgers durch das Werkzeugteil am stirnseitigen Rand im Bereich des schräg verlaufenden Randabschnitts einen gegenüber der Vorderseite in Richtung zum Werkzeugteil vorstehenden Fortsatz. Ansonsten ist vorteilhafter Weise die Vorderseite des Borstenträgers komplett eben.

Als Werkzeugteil wird insbesondere ein Magazin eingesetzt, welches mit der zumindest einen Borste oder dem zumindest einen Borstenbüschel bestückt wird. Sind mehrere Borsten oder mehrere Borstenbüschel am Borstenträger zu befestigen, so sind alle Borsten bzw. Borstenbüschel in demselben Magazin untergebracht und werden nach dem Bestücken gleichzeitig eingeschoben.

Das oder die Befestigungsenden der Borsten bzw. Borstenbüschel ragen nach dem Bestücken mit ihrem Befestigungsende aus dem Magazin heraus und werden an diesem Befestigungsende erhitzt, ohne das Magazin dabei verlassen zu müssen. Die Verdickung bildet sich dann am frei vom Magazin abstehenden Befestigungsende. Das Magazin ist also kein reines Stempelwerkzeug, sondern auch ein Transportwerkzeug, welches seitlich zum Borstenträger aus einer Bestückungsstation kommend herangefahren wird und anschließend gegen den Borstenträger gepresst wird.

Die Verdickung, d.h. das verdickte Befestigungsende, kann anschließend, d.h. unmittelbar nach ihrer Erzeugung, aktiv gekühlt werden, bevor sie in die Verankerungsöffnung im Borstenträger eingeschoben wird. Damit lässt sich die Taktzeit erhöhen. Darüber hinaus wird vermieden, dass die Verdickung anschließend beim Aufbringen der Druckkraft so verformt wird, dass die Borsten nicht mehr optimal zueinander ausgerichtet sind. Die aktive Kühlung bedeutet nicht etwa, dass das verdickte Befestigungsende in der Vorrichtung durch die dort herrschende Umgebungstemperatur gekühlt wird. Vielmehr ist eine Einrichtung zur Kühlung vorgesehen, beispielsweise ein aktiver Luftstrom, der durch einen Ventilator erzeugt wird. Dieser Luftstrom kann entweder Umgebungsluft beispielsweise von weiter entfernt von den beheizten Teilen herantransportieren oder auch gekühlte Luft heran transportieren, welche aus einem Klimasystem stammt. Eine weitere Möglichkeit besteht darin, eine Kältekammer vorzusehen, durch welche das Befestigungsende mit der oder den Borsten hindurch transportiert wird.

Wie bereits erwähnt, hat das Werkzeugteil beispielsweise eine ebene, dem Borstenträger zugewandte Stirnseite (zumindest im Kontaktbereich mit dem Borstenträger) und/oder eine Geometrie, die nicht in die Verankerungsöffnung ragen kann, das heißt ohne stiftartige Vorsprünge oder dergleichen, wie dies im Stand der Technik vorgeschlagen wurde.

Wie sich herausgestellt hat, ist die Lage der sogenannten Trennebene zwischen der Halterung und dem Werkzeugteil, in welcher beide aneinander anlegen, relativ zum Borstenträger wichtig. So ist es vorteilhaft, wenn die zur Aufnahme des Borstenträgers gebildete Kavität nicht nur in der Halterung ausgebildet ist, sondern auch teilweise im Werkzeugteil. Bezogen auf die Dicke des Borstenträgers ist jedoch der überwiegende Teil der Kavität durch eine Vertiefung in der Halterung gebildet. Die Trennebene sollte vorzugsweise nahe an oder unmittelbar angrenzend an einen gerundeten Übergang zwischen der Seitenfläche und der Vorderseite des Borstenträgers liegen, d.h. außerhalb des gerundeten Übergangs. Damit wird dieser gerundete Übergang keinesfalls mit irgendeinem Absatz oder einem Grat versehen, der durch herausgepresstes Material des Borstenträgers erzeugt wird.

Durch das Aufbringen von Druck und Wärme oder nur von Druck wird die Gesamtdicke des Borstenträgers bleibend reduziert, das heißt nicht nur partiell, sondern insgesamt. Die dem Borstenträger gegenüberliegende Stirnseite des Werkzeugteils wird insbesondere auf eine Temperatur gebracht, die maximal 140 °C, insbesondere maximal 130 °C beträgt. Beispielsweise wird hier als Material für den Borstenträger Polypropylen, PET, ABS oder SAN verwendet.

Bei Verwendung von PET als Borstenträgermaterial hat sich herausgestellt, dass die Vorderseite des Borstenträgers beim Umformen auf 75-95 °C, insbesondere 80-90 °C, und bei Verwendung von PP (zum Beispiel mit einem Melt-Flow-Index (MFI)) von 6-35, vorzugsweise 10-15, auf 105-125°C, insbesondere 110-120°C gebracht werden sollte.

An den Borstenträger kann, wie schon zuvor kurz erwähnt, zeitlich vor oder nach der Befestigung der zumindest einen Borste zumindest ein vorderseitig vorstehendes, elastisches Reinigungselement aus einem Elastomer, insbesondere TPE, angespritzt und am Borstenträger befestigt werden, wobei das Reinigungselement am Rand des Borstenträgers und/oder einwärts des Randes zwischen Borsten oder Borstenbüscheln angeordnet ist. Folglich sind Mischformen von Reinigungselementen in derselben Bürste denkbar. Angespritzte Reinigungselemente, Borstenbüschel, die durch das Umformen des Randes der Verankerungsöffnung am Borstenträger befestigt werden, sowie singuläre Borsten in Form von elastomeren, vorgefertigten Reinigungselementen, die ebenfalls durch Umformen des Randes der Verankerungsöffnung am Borstenträger befestigt werden, können in beliebigen Kombinationen am Borstenträger angebracht werden. Ferner kann der Bürstenkörper als Mehrkomponenten-Spritzgußteil ausgebildet sein

Die Borsten können auch bereits vorgespitzte, und zwar chemisch oder mechanisch vorgespitzte Borsten oder vorgerundet sein.

In demselben Borstenträger können mehrere Borstenbüschel verankert werden, wobei zumindest ein Borstenbüschel aus Borsten aus einem anderen Material mit einer anderen Schmelztemperatur als die Borsten zumindest eines anderen Borstenbüschels besteht. Die aus unterschiedlichen Borstenmaterialien bestehenden Borstenbüschel werden unterschiedlich stark aufgeheizt, um jeweils zur Bildung eines verdickten Befestigungsendes die Borsten eines Büschels miteinander zu verschmelzen. Dies lässt sich auf verschiedene Art und Weisen umsetzen: Der Abstand zwischen dem einer Heizeinrichtung zugewandten Ende des Borstenbüschels und der Heizeinrichtung wird abhängig vom Borstenmaterial unterschiedlich eingestellt und/oder die Heizeinrichtung wird abhängig vom Borstenmaterial auf unterschiedliche Temperaturen aufgeheizt und/oder verschiedene, auf unterschiedliche Temperaturen aufgeheizte Heizeinrichtungen, abgestimmt auf das zugeordnete Borstenmaterial, werden verwendet.

Beispielsweise werden die Borstenbüchel unterschiedlich weit aus dem Magazin herausgedrückt. Diejenigen Borstenbüschel aus leichter schmelzendem Material bleiben z.B. näher am Magazin als die anderen, so dass die weiter herausgefahrenen Borstenbüschel näher zur Heizeinrichtung gelangen als die anderen und daher stärker erwärmt werden. Alternativ können die Borstenbüschel auch nacheinander bearbeitet werden, indem die, unterschiedliche Borstenmaterialien aufweisenden Borstenbüschel nacheinander mit ihrem Befestigungsende aus dem Magazin geschoben zu werden, um dann näher zur Heizeinrichtung zu gelangen. Entweder die Heizeinrichtung wird dann auf zwei geeignete, unterschiedliche Temperaturen aufgeheizt, oder unterschiedlich heiße Heizeinrichtungen kommen für ihre jeweils zugeordneten Borstenbüschel zum Einsatz.

Bei einer Bürste mit Nylon und mit PBT Borsten werden z.B. zuerst die Borsten aus Nylon erhitzt und anschließend die aus PBT.

Die vorerwähnten vorteilhaften Varianten können ausdrücklich auch beliebig miteinander kombiniert werden.

Die vorliegende Erfindung schafft aber auch eine Vorrichtung zum Herstellen einer Bürste, zur Durchführung eines erfindungsgemäßen Verfahrens, bei der ein Werkzeugteil mit zumindest einer Aufnahmeöffnung für zumindest eine Borste oder zumindest ein Borstenbüschel und eine gegenüberliegende Halterung vorgesehen sind. Das Werkzeugteil und die Halterung sind aufeinander zu und voneinander weg verfahrbar (in Zustellvorrichtung und entgegengesetzt zur Zustellrichtung). Das Werkzeugteil ist beheizbar, beispielsweise durch eine elektrische Widerstandsheizung, welche integriert ist, und die Halterung ist mit einer aktiven Kühleinrichtung versehen, insbesondere an einen Kühlwasserkreislauf angeschlossen. Somit wird in Bauteilen, die einander berühren und zumindest eine gemeinsame Kavität zur Aufnahme eines Borstenträgers definieren, gleichzeitig geheizt und gekühlt.

Die erfindungsgemäße Vorrichtung zum Herstellen einer zumindest eine Borste oder zumindest ein Borstenbüschel, vorzugsweise mehrere Borstenbüschel, aufweisenden Bürste, die einen Borstenträger mit zumindest einer Verankerungsöffnung für die zumindest eine Borste oder das zumindest eine Borstenbüschel besitzt, hat eine Halterung für den Borstenträger sowie ein (beispielsweise als Pressstempel ausgebildetes) Werkzeugteil mit zumindest einer Aufnahmeöffnung für die zumindest eine Borste oder das zumindest eine Borstenbüschel aufweist, wobei die Aufnahmeöffnung auf der dem Borstenträger zugewandten Stirnseite des Werkzeugteils mündet, und wobei das Werkzeugteil eine zumindest Abschnitte der Stirnseite erwärmende Heizung besitzt, die so ausgebildet und so geregelt ist, dass die Stirnseite auf eine Temperatur von maximal 140 °C, insbesondere maximal 130 °C aufgeheizt wird. Insbesondere wird hier als Material für den Borstenträger Polypropylen, PET, ABS oder SAN verwendet.

Bei der erfindungsgemäßen Vorrichtung wird ein Werkzeugteil, das als temporärer Träger für die Borste oder das oder die Borstenbüschel fungiert, als Pressstempel und zugleich als Transportmittel verwendet. Eine Heizung an der Stirnseite des Werkzeugteils ist so ausgeführt und ist so über eine Steuerung geregelt, dass die Stirnseite auf eine Temperatur von maximal 140 °C, insbesondere maximal 130 °C aufgeheizt wird, wenn sie gegen den Borstenträger verfahren wird. Eine Vorrichtung, die zwar höhere Temperaturen theoretisch fahren kann, deren Steuerung oder Regelung aber die Temperatur entsprechend vorbestimmt begrenzt, fällt natürlich auch unter die definitionsgemäße Vorrichtung.

Wie zuvor bereits im Zusammenhang mit dem Verfahren erläutert, kann die Zustellbewegung des Werkzeugteils relativ zu einer Halterung des Borstenträgers durch Bewegung des Halters und/oder des Werkzeugteils realisiert werden, wobei die Zustellbewegung druck- und zeitgesteuert und/oder druck- und weggesteuert oder nur zeitgesteuert oder nur weggesteuert sein kann.

Die erfindungsgemäße Vorrichtung kann einen Druck von wenigstens 200 bar, insbesondere wenigstens 400 bar auf den Borstenträger aufbringen, das heißt in Richtung zur Halterung.

Die Heizbarkeit des Werkzeugteils sollte im gesamten Kontaktbereich mit dem Borstenträger ausgeführt sein oder sogar im gesamten Bereich der Stirnseite des Werkzeugteils, die der Halterung und damit dem in die Halterung eingesetzten Borstenträger gegenüberliegt.

Wie ferner bereits im Zusammenhang mit dem erfindungsgemäßen Verfahren erläutert, ist das Werkzeugteil beispielsweise ein Magazin, welches in einer Bestückungsstation der Vorrichtung mit der zumindest einen Borste oder dem zumindest einen Borstenbüschel bestückt wird. Die zumindest eine Borste oder das zumindest eine Borstenbüschel (unter "zumindest eine Borste" fallen generell, für die gesamte vorliegende Beschreibung und die Ansprüche auch ein oder mehrere Borstenbüschel) ragt nach dem Bestücken mit ihrem/seinem Befestigungsende aus dem Magazin. In einer Schmelzstation, welche nach der Bestückungsstation liegt, wird das oder werden die Befestigungsenden erhitzt, wodurch sich jeweils eine Verdickung ausbildet. Bei Verwendung eines oder mehrerer Borstenbüschel werden die Borsten des entsprechenden Borstenbüschels durch thermisches Umformen miteinander vereinigt. Es bildet sich insbesondere eine Art pilz-, kalotten- oder kugelförmige Verdickung aus.

Generell kann bei der erfindungsgemäßen Vorrichtung entweder das Magazin verfahren werden und die Stationen stationär sein, oder das Magazin bleibt stationär und Stopfwerkzeuge oder Heizeinrichtungen oder Halterungen werden zum Magazin bewegt. Diese Werkzeuge oder Haltungen können beispielsweise auf einem sich drehenden Karussell angeordnet sein, das nacheinander Magazine, die stationiert sind, abfährt. Die erfindungsgemäße Vorrichtung hat eine Steuerung, die die Zustellbewegung des Werkzeugteils relativ zum Borstenträger sowie den Heizvorgang des Werkzeugteils so steuert, dass das Werkzeugteil, bevor es den Borstenträger kontaktiert, aufgeheizt ist. Das bedeutet, vor der Zustellbewegung des Werkzeugteils in Richtung zur Halterung ist das Werkzeugteil bereits warm. In dieser Phase kann, muss jedoch noch nicht, die maximale Betriebstemperatur vorhanden sein. Der Borstenträger wird erst nach dem Einbringen der zumindest einen Borste durch das Werkzeugteil erwärmt, was durch den Überstand des verdickten Endes relativ zum Magazin und zum Abstand der Stirnseite des Magazins zur entsprechenden Kontaktfläche am Borstenträger realisiert wird.

Die erfindungsgemäße Vorrichtung ist insbesondere so ausgebildet, dass das Werkzeugteil permanent auf die gewünschte Temperatur aufgeheizt ist, die zum Aufheizen der Vorderseite des Borstenträgers für den Verformungsvorgang notwendig ist. Das bedeutet, das Werkzeugteil ist auch bereits warm und auf dieser gewünschten Temperatur, wenn die zumindest eine Borste oder das oder die Borstenbüschel in die Aufnahmeöffnung bzw. Aufnahmeöffnungen eingeführt werden. Wenn das Werkzeugteil auch beim Schmelzen der Borstenenden zur Bildung des verdickten Befestigungsendes die zumindest eine Borste/ein Borstenbüschel aufnimmt, muss dafür Sorge getragen werden, dass die Temperatur des Werkzeugteils und/oder die Verweilzeit der zumindest einen Borste/des Borstenbüschels in der Aufnahmeöffnung nicht zu einer Verformung der Borste oder Borsten eines Borstenbüschels führt.

Die Steuerung kann das Werkzeugteil auf eine solche Temperatur aufheizen und die Zustellung des Werkzeugteils zum Borstenträger so steuern, dass das Werkzeugteil den Borstenträger im Bereich der Kontaktfläche mit dem Werkzeugteil während der Zustellbewegung des Werkzeugteils zum Borstenträger und/oder bei Kontaktierung des Borstenträgers auf eine Temperatur bringt, die unterhalb der Schmelztemperatur des Materials des Borstenträgers und, vorzugsweise, größer gleich der Glasübergangstemperatur des Materials des Borstenträgers ist, insbesondere wobei die Steuerung derart programmiert ausgebildet ist, dass sie bei einem Borstenträgermaterial mit einer Glasübergangstemperatur von größer gleich 300° K die Temperatur des Werkzeugteils maximal 15% über der Glasübergangstemperatur gerechnet in ° K einstellt und bei einem Borstenträgermaterial mit einer Glasübergangstemperatur von kleiner 300° K maximal 50 % über der Glasübergangstemperatur in ° K einstellt.

Selbstverständlich können beim erfindungsgemäßen Verfahren oder der erfindungsgemäßen Vorrichtung Bürstenkörper oder Borstenträger zugeführt werden, die im Standard-Ein- oder Mehrkomponenten-Spritzgieß-Verfahren hergestellt werden. So sind Griffe, oder allgemeiner, Bürstenkörper oder Borstenträger verwendbar, die bei Zahnbürsten eingesetzt werden, die eigentlich traditionell mit der (Metall-)Ankertechnik bestopft werden. Üblicherweise haben diese Griffe/Bürstenkörper/Borstenträger jedoch tiefere Verankerungsöffnungen als dies beim erfindungsgemäßen Verfahren notwendig ist.

Auch bei der Ankertechnik gibt es seit Jahren bereits Mehrkomponenten-Griffe oder Bürstenkörper oder Borstenträger, wo im Kopfbereich der Bürstenkörper zwischen den Verankerungsöffnungen und/oder dem Rand des Bürstenkopfes elastomere Strukturen angespritzt sind. Auch auf dem Rücken des Bürstenkopfes können z. B. elastomere Zungenreiniger angebracht und angespritzt sein. Alle diese Möglichkeiten gelten auch für das erfindungsgemäße Verfahren und die erfindungsgemäße Vorrichtung.

Bei der Ankertechnik werden diese elastomeren Strukturen vorder- oder rückseitig angebracht, bevor die Beborstung stattfindet. Nur ausnahmsweise erfolgt das Anbringen der elastomeren Struktur nach der Beborstung, was jedoch nicht üblich ist. Meistens werden in einem Mehrkomponenten-Spritzgießwerkzeug diese elastomeren Strukturen auf eine steifere Trägerstruktur gespritzt. Solche Mehrkomponentenwerkzeuge für Zahnbürstenkörper sind sehr verbreitet.

Die Griffe, Bürstenkörper/Borstenträger, die beim erfindungsgemäßen Verfahren und/oder der erfindungsgemäßen Vorrichtung zugeführt werden, können problemlos mit allen heutzutage bekannten Bürstenkörperspritzgießtechniken und -werkzeugen gespritzt werden. Die Verankerungsöffnungen werden dabei vorgespritzt mittels Formstiften, die rund oder jede beliebige Querschnittsform haben können und die in die Spritzkavität hineinragen. Diese Stifte können dann nach ausreichender Kühlung und/oder Aushärtung des eingespritzten Kunststoffes aus den Kavitäten herausgezogen werden, z. B. mittels Schiebern, bevor eine komplette Entformung des Spritzgußteils erfolgt. Die sogenannten Formstifte können dabei parallel und/oder gewinkelt zueinander angebracht sein, um demzufolge parallele und/oder gewinkelte Verankerungsöffnungen im Spritzgießteil zu erzeugen. Beim erfindungsgemäßen Verfahren und der erfindungsgemäßen Vorrichtung können Stifte beim Spritzen von solchen Teilen typischerweise etwas weniger tief in die Spritzkavitäten eintauchen als beim Spritzen von Bürstenkörpern oder Borstenträgern, die mit der Ankertechnik bestopft werden sollen. Demzufolge sind die Verankerungsöffnungen in den Spritzlängen etwas weniger tief. Da diese Öffnungen weniger tief sind, lässt sich die gesamte Kopfdicke der Bürsten, die mit dem erfindungsgemäßen Verfahren und der erfindungsgemäßen Vorrichtung hergestellt werden, deutlich geringer ausführen als bei Bürstenköpfen, die mit der Ankertechnik bestopft werden. Damit ergibt sich bei Herstellung von Zahnbürsten ein klinischer Vorteil.

Das erfindungsgemäße Verfahren und die erfindungsgemäße Vorrichtung haben besondere Vorteile bei Verwendung von klaren Materialien für den Borstenträger oder den Bürstenkörper. Solche Materialien sind üblicherweise PET, Copolyester, SAN, ABS usw. Auch diese Materialien können wie bei Borstenträgern/Bürstenkörpern/Griffen aus Polypropylen vorgespritzte Verankerungsöffnungen haben und/oder mit Elastomeren (z. B. TPE, TPU) im Mehrkomponentenverfahren versehen werden. Nachdem die Borstenträger/Bürstenkörper/Griffe dann im Mehrkomponentenverfahren gespritzt sind, können sie wie zuvor und anschließend anhand der Vorrichtung beschrieben, weiter verarbeitet werden, wie die Erfindung dies vorsieht.

Vor der Station mit der Halterung und dem zum Beispiel als Pressstempel wirkenden Werkzeugteil kann eine Spritzstation zur Erzeugung des Büschelträgers vorgesehen sein, wobei in der Spritzstation eine Spritzgussformhälfte mit zumindest einem in eine Spritzkavität hineinragenden Fortsatz, der unbeweglich an der Spritzgussformhälfte befestigt oder einstückiger Teil desselben ist, vorhanden ist. Damit sind die bislang bei Spritzgussformhälften eingesetzten aktiven Schieber teilweise oder sogar komplett überflüssig. Jeder Fortsatz erzeugt nämlich eine als Sackloch ausgebildete Verankerungsöffnung. Schieber sind nicht nur aufwendig in der Fertigung, sondern auch aufwendig bezüglich Wartung und Reparatur. Dadurch, dass bei der erfindungsgemäßen Vorrichtung die Borste oder Borstenbüschel nicht mit einem Anker im Borstenträger fixiert werden, der eine Mindesttiefe für die Verankerungsöffnung erfordert, reichen Verankerungsöffnungen mit geringerer Tiefe völlig zur Fixierung der Borste oder Borstenbüschel aus.

Die Vorrichtung hat zumindest einen Elektromotor, vorzugsweise Servomotor zum Aufbringen der Druckkraft auf den Borstenträger. Elektromotoren haben den Vorteil, dass die Druckkraft sehr einfach eingestellt werden kann und dass sie zuverlässig und leicht wieder verstellbar sind.

Es können mehrere Elektromotoren zum Aufbringen der Druckkraft vorgesehen sein. Ferner kann ein Elektromotor auch mehrere Borstenträger gleichzeitig mit Druck beaufschlagen, indem zwischen einem Werkzeugteil und einer Halterung mehrere Kavitäten begrenzt werden. Um die Ausstoßrate der Vorrichtung zu erhöhen, sind insbesondere mehrere Elektromotoren vorgesehen, die jeweils mehrere Borstenträger mit Druck beaufschlagen.

Ferner ist zur Erhöhung der Ausstoßrate der Einsatz von Drehtischen oder dergleichen sinnvoll. Es können beispielsweise je nachdem, in welchen Stationen eine längere Taktzeit erforderlich ist, mehrere Einheiten vorgesehen sein.

Die Vorrichtung nach der Erfindung sollte eine Steuerung haben, die so programmiert ist, dass das Werkzeugteil im Betrieb permanent auf die beim Aufbringen des Drucks auf den Borstenträger gewünschte Temperatur aufgeheizt ist. Es sind somit im Betrieb keine gewünschten Temperaturschwankungen vorhanden, sodass es keine Aufheizzeit für das Werkzeugteil gibt, die sich auf die Taktrate negativ auswirken würde.

Die zuvor erwähnte Halterung ist erfindungsgemäß mit zumindest einem Kühlkanal versehen. Anschlüsse an der Außenseite der Halterung erlauben den Anschluss an einen Kühlkreislauf, insbesondere einen Flüssigkeitskühlkreislauf.

Die Halterung ist insbesondere eine Platte mit einer oder mehreren Kavitäten zur Aufnahme des/der Borstenträger.

Die Halterung besitzt ferner vorzugsweise Vertiefungen für mehrere Borstenträger, um Teilkavitäten zu bilden. Aufgrund der Tatsache, dass die Halterung mit den Vertiefungen auf das Design der Bürste exakt abgestimmt ist (flächige Auflage), muss für jedes neue Design eine neue Halterung hergestellt werden. Somit sind die Halterungen extrem teuer. Die Kühlkanäle erhöhen noch die Kosten.

Um die Kosten gering zu halten, kann es vorteilhaft sein, wenn die Halterung auf ihrer Rückseite nur einen im Querschnitt gesehen rinnenförmigen Kühlkanal hat, der sehr einfach durch Fräsen entsteht. Der Kühlkanal wird dann vervollständigt, indem eine vorrichtungsseitige, beispielsweise permanent vorhandene Flanschplatte auf ihrer Vorderseite ebenfalls mit einer Rinne versehen ist. Wenn die Halterung dann an die Flanschplatte angeschraubt wird, ergänzen sich die beiden Rinnen zum geschlossenen Kühlkanal oder den geschlossenen Kühlkanälen. Alternativ können die Kühlkanäle oder der Kühlkanal natürlich auch durch eine oder mehrere Bohrungen durch die plattenartige Halterung entstehen. Um die beispielsweise parallelen Bohrungen randseitig miteinander zu verbinden, können Kopfplatten vorgesehen sein, ähnlich wie bei einem Autokühler. Diese verbinden benachbarte Enden von Kühlkanälen miteinander strömungsmäßig.

Die Halterung hat für jeden Borstenträger eine komplementär zum Borstenträger geformte Ausnehmung, aus der der Borstenträger vorzugsweise etwas herausragt.

Im Übrigen wird ausdrücklich darauf hingewiesen, dass die zuvor im Zusammenhang mit dem erfindungsgemäßen Verfahren erwähnten Vorteile und Merkmale auch auf die erfindungsgemäße Vorrichtung anwendbar sind, und zwar einzeln oder in Kombination, entsprechend dem erfindungsgemäßen Verfahren.

Ferner ist zu betonen, dass das erfindungsgemäße Verfahren und die erfindungsgemäße Vorrichtung bei beliebigen Bürsten eingesetzt werden können, nicht nur bei Zahnbürsten. Beispielsweise lassen sich Verfahren und Vorrichtung auch für Haushaltsbürsten, Schrubber, Haushaltsbesen oder Besen jeglicher Art, Spülbürsten, Toilettenbürsten, Haarbürsten, Staubsaugerbürsten, Handwaschbürsten und Pinseln jeglicher Art, zum Beispiel zum Streichen, Malen oder Nagellackpinsel, Gesichtsbürsten (ebenso wie Zahnbürsten manuelle oder elektrische Bürsten) einsetzen. Die in den nachfolgenden Zeichnungen beschriebenen Details und Varianten sind folglich auch für alle diese Bürsten einsetzbar.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1a bis 1g verschiedene aufeinanderfolgende Schritte des erfindungsgemäßen Verfahrens in perspektivischer Draufsicht und perspektivischer Unteransicht, die auch die erfindungsgemäße Vorrichtung zeigt,
- Figur 2 eine vergrößerte Ansicht der perspektivischen Unteransicht der Verankerungsstation in Figur 1e,
- Figur 3 eine Querschnittsansicht durch die in Figur 1e und 1f dargestellte Verankerungsstation vor dem Aufeinanderzubewegen von Magazin und Borstenträger,
- Figur 4 eine entsprechende Ansicht der Station nach Figur 3 bei erster Kontaktierung des Magazins und des Borstenträgers,
- Figur 5 und 5A entsprechende Ansichten der Verankerungsstation nach Figur 3 nach dem Ende der Zustellbewegung und nach dem Ende der Einwirkzeit, unmittelbar vor Auseinanderfahren und Öffnen der Station,
- Figur 6 eine Schnittansicht durch eine alternative Bestückungsstation,
- Figur 7 eine Schnittansicht durch die Verankerungsstation gemäß Figur 3, bei der schräg gerichtete Borstenbüschel verarbeitet werden,
- Figur 8 eine Schnittansicht durch einen bei der Erfindung eingesetzten, alternativen Borstenträger,

Figur 9 eine Frontansicht eines bei der vorliegenden Erfindung erzeugten Borstenträgers,
Figur 10 eine Schnittansicht durch eine Spritzgußform, mit der der Borstenträger nach Figur 9 gespritzt wird,
Figur 11 eine Schnittansicht durch einen Borstenträger beim Einsetzen von Borstenbüscheln und/oder einzelnen elastomeren Borsten,
Figur 12 Varianten von bei der Erfindung verwendeten singulären, vorgefertigten Borsten,
Figur 13 Varianten des erfindungsgemäßen Verfahrens und der erfindungsgemäßen Vorrichtung,
Figur 14 eine vergrößerte Schnittansicht durch eine Variante der erfindungsgemäßen Vorrichtung, hier der Verankerungsstation, mit der Halterung, und
Figur 15 eine vergrößerte Schnittansicht durch noch eine Variante der erfindungsgemäßen Vorrichtung, hier der Verankerungsstation, mit der Halterung bei Verwendung für ein mit einem Elastomer versehenen Borstenträger.

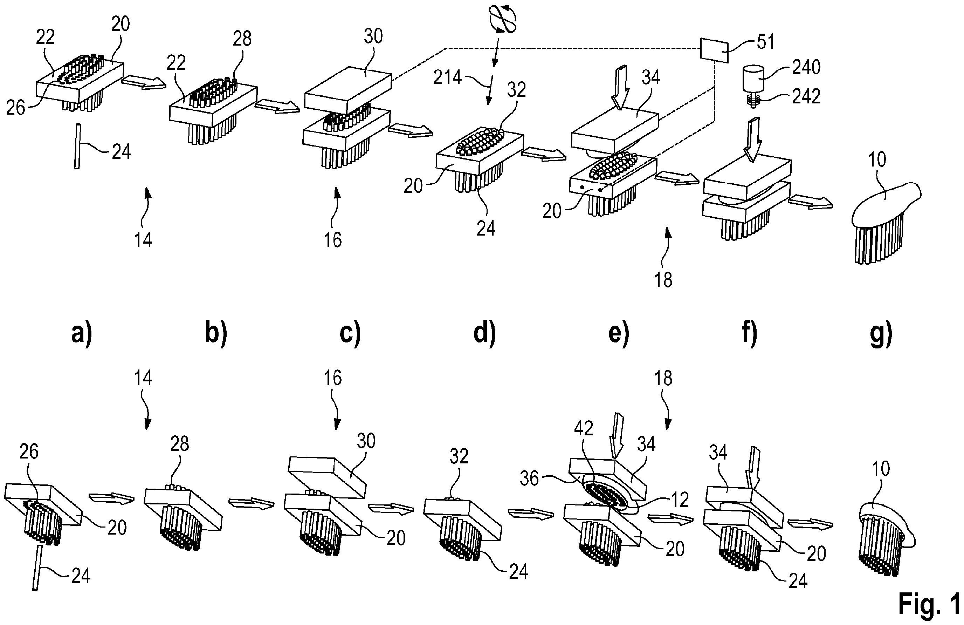

In Figur 1 ist eine Vorrichtung zum Herstellen von Bürsten, beispielsweise Zahnbürsten, dargestellt. Eine solche Zahnbürste weist bekanntlich einen Bürstenkopf mit vorderseitig abstehenden Borstenbüscheln, einen Hals und einen Griff auf. Diese drei Abschnitte können einstückig ineinander übergehen, sie bilden den sogenannten Bürstenkörper. Der Bürstenkopf kann entweder direkt bestopft werden, oder er kann zweiteilig ausgeführt werden, mit einem plättchenartigen Borstenträger, welcher nach dem Spritzgießen bereits vorgefertigte sacklochartige Verankerungsöffnungen besitzt, wobei dieser plättchenartige Borstenträger anschließend mit dem Rest des Kopfes zusammengebracht wird, entweder durch Verschweißen, Verkleben oder durch Umspritzen. Eine Alternative hierzu besteht darin, dass der Bürstenkopf einstückig ausgeführt ist, sodass er selbst den Borstenträger bildet.

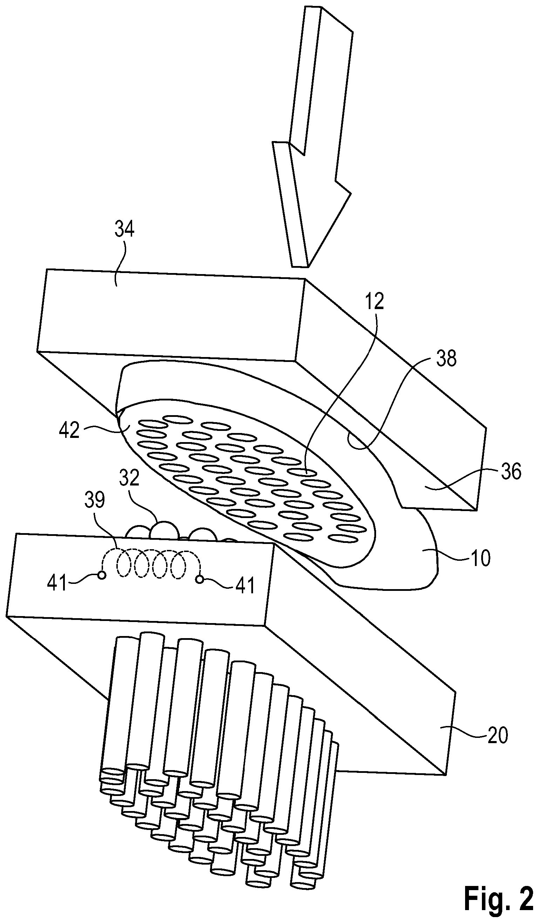

Eine derartige Ausführung ist in Figur 1 dargestellt, der Bürstenkopf bildet gleichzeitig den Borstenträger 10. In dieser Darstellung ist der Borstenträger 10 gleichzeitig der Bürstenkörper, denn er umfasst Stil, Hals und Kopf der Bürste. Der Borstenträger 10 ist ein vorgefertigtes, spritzgegossenes Teil. Figur 2 zeigt, dass der Borstenträger 10 auf seiner Unterseite zahlreiche vorgefertigte, beim Spritzgießen erzeugte Öffnungen 12 besitzt, in die Borstenbüschel eingesetzt und darin verankert werden. Die nachfolgende Beschreibung ist aber identisch auf plättchenartige Borstenträger 10 übertragbar und lesbar.

Die in Figur 1 gezeigte Vorrichtung umfasst mehrere Stationen, nämlich eine Bestückungsstation 14, die in den Figuren 1a und 1b dargestellt ist, eine Schmelzstation 16, die in Figur 1c gezeigt ist, sowie eine Verankerungsstation 18 für die Borstenbüschel, die in den Figuren 1e und 1f dargestellt ist.

Sämtliche Stationen werden von einem Magazin 20, auch Werkzeugteil genannt, durchlaufen, welches Borstenbüschel durch die einzelnen Stationen transportiert.

Obwohl in Figur 1 ein Magazin 20 mit später noch genauer dargestellten Aufnahmeöffnungen für eine Bürste gezeigt ist, sind die Magazine 20 in der Praxis vorzugsweise so groß, dass mehrere nebeneinanderliegende Gruppen von Aufnahmeöffnungen für mehrere Bürsten im Magazin 20 ausgebildet sind. Es können auch mehrere Reihen von Gruppen von Aufnahmeöffnungen für mehrere Bürsten vorhanden sein.

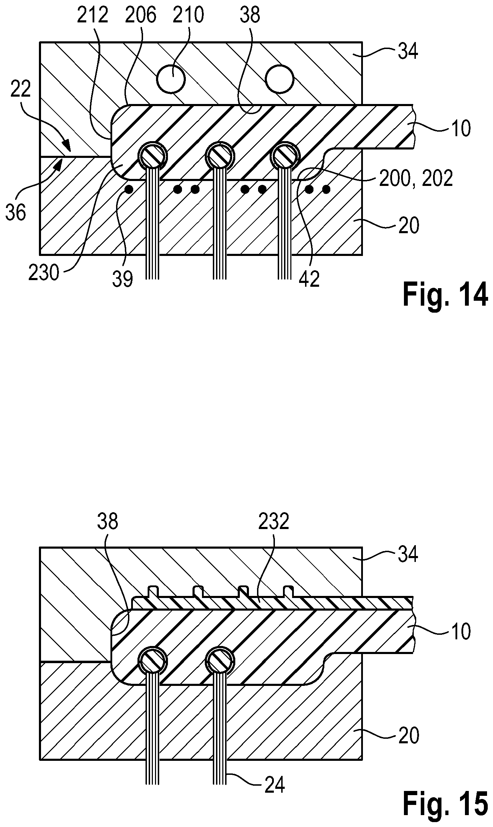

Das Magazin 20 ist zum Beispiel ein plattenförmiges Teil mit gleichbleibender Dicke, welches eine gemäß Figur 1 obere, ebene Stirnseite 22 besitzt. Alternativ hierzu hat das Magazin, welches im wesentlichen plattenförmig ist, auf seiner ebenen Stirnseite 22 eine Vertiefung 200 mit einem Boden 202, der ebenfalls eben sein kann, wie dies in Figur 14 dargestellt ist, um einen Teil einer Kavität zur Aufnahme des Borstenträgers 10 zu bilden.

Da das Magazin mehrere Stationen durchläuft und anschließend für die Herstellung weiterer Bürsten verwendet wird, ist ein Magazin-Umlaufbetrieb in der Vorrichtung vorhanden, wobei zahlreiche identisch ausgebildete Magazine 20 nacheinander durch die einzelnen Stationen getaktet werden. Das Magazin 20 ist damit ein Transportmittel für Borstenbüschel 24 durch die Vorrichtung hindurch. Alternativ hierzu kann das Magazin feststehend sein, und die einzelnen Stationen werden um das Magazin herum getaktet, beispielsweise auf einem Karussell. Dabei lassen sich gleichzeitig mehrere feststehende Magazine bearbeiten, genauer gesagt die in den Magazinen angeordneten Borstenbüschel.

Das Magazin 20 besitzt zahlreiche Aufnahmeöffnungen 26, die ein Lochbild haben, welches dem Lochbild des Borstenträgers 10 entspricht.

Jedes Borstenbüschel 24 besteht aus mehreren Borsten, die aus einem Borstenvorrat vereinzelt und, wie Figur 1a zeigt, in das Magazin 20 eingeschoben werden, beispielsweise über Stifte, wie dies später noch erläutert wird. Die einzelnen Borstenbüschel 24 können über Rohre mit Druckluft oder Vakuum herantransportiert werden.

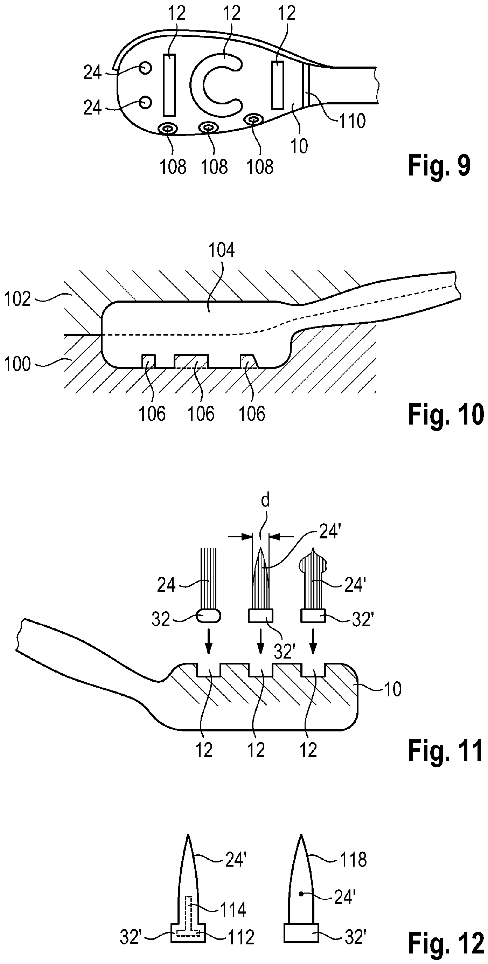

Die Borsten sind aus einem thermoplastischen Material, insbesondere PA, PBT, Polyester, Copolyester oder Polypropylen, sie können jedoch auch aus Elastomeren bestehen. Weiter ist es auch möglich, koextrudierte Borsten einzusetzen, beispielsweise mit einem Kern aus PA mit Elastomerbeschichtung. Wie später anhand der Figuren 11 und 12 noch erläutert werden wird, ist es auch nicht zwingend notwendig, dass ausschließlich Borstenbüschel 24 eingesetzt und in die Verankerungsöffnung eingebettet werden, sondern es kann auch nur eine singuläre, vorgefertigte Borste in Form beispielsweise eines elastomeren Reinigungselementes in seiner Verankerungsöffnung entsprechend dem vorgenannten und nachfolgend beschriebenen Verfahren eingesetzt und fixiert werden. Solche Reinigungselemente werden separat gespritzt oder geschäumt und sind weicher als der Borstenträger 10.

Die Borstenbüschel 24 haben entgegengesetzte Enden und ragen mit ihren rückwärtigen Enden 28, Befestigungsenden genannt, etwas aus dem Magazin 20 heraus, sie stehen also gegenüber der Stirnseite 22 etwas vor. Dies ist in Figur 1b gezeigt.

Das Magazin 20, welches komplett mit den Borstenbüscheln 24 bestückt ist, wird seitlich in die Schmelzstation 16 transportiert, wie in Figur 1c gezeigt. In dieser Station ist eine Heizeinrichtung 30 vorhanden, die beispielsweise eine Plattenheizung oder eine Heißluftheizung sein kann. Kontaktlos werden die rückwärtigen Enden 28 der Borstenbüschel 24 erhitzt, sodass die einzelnen Borsten ihre Schmelztemperatur übersteigen und die Borsten eines Büschels miteinander zu einem verdickten Befestigungsende zusammenfließen. Die Borsten eines Borstenbüschels 24 sind damit einstückig miteinander verbunden. Die Verdickung 32 eines Borstenbüschels 24 geht nicht in benachbarte Verdickungen der angrenzenden Borstenbüschel 24 über, sondern bleiben kugeloder linsenförmige Verdickungen. Auch wird vorzugsweise kein Stempel gegen die Verdickungen oder das noch flüssige Material der aufgeschmolzenen Borstenenden gedrückt.

In demselben Borstenträger 10 können mehrere Borstenbüschel 24 verankert werden, wobei zumindest ein Borstenbüschel 24 aus Borsten aus einem anderen Material mit einer anderen Schmelztemperatur als die Borsten zumindest eines anderen Borstenbüschels 24 besteht. Die aus unterschiedlichen Borstenmaterialien bestehenden Borstenbüschel 24 werden unterschiedlich stark aufgeheizt, um jeweils zur Bildung eines verdickten Befestigungsendes die Borsten eines Büschels miteinander zu verschmelzen. Dies lässt sich auf verschiedene Art und Weisen umsetzen: Der Abstand zwischen dem einer Heizeinrichtung 30 zugewandten Ende des Borstenbüschels 24 und der Heizeinrichtung 30 wird abhängig vom Borstenmaterial unterschiedlich eingestellt und/oder die Heizeinrichtung 30 wird abhängig vom Borstenmaterial auf unterschiedliche Temperaturen aufgeheizt und/oder verschiedene, auf unterschiedliche Temperaturen aufgeheizte Heizeinrichtungen 30, abgestimmt auf das zugeordnete Borstenmaterial, werden verwendet.

Beispielsweise werden die Borstenbüschel abhängig vom Borstenmaterial unterschiedlich weit aus dem Magazin 20 herausgedrückt. Diejenigen Borstenbüschel 24 aus leichter schmelzendem Material bleiben z.B. näher am Magazin 20 als die anderen, so dass die weiter herausgefahrenen Borstenbüschel 24 näher zur Heizeinrichtung 30 gelangen als die anderen und daher stärker erwärmt werden.

Alternativ können die Borstenbüschel 24 auch nacheinander bearbeitet werden, indem die, unterschiedliche Borstenmaterialien aufweisenden Borstenbüschel 24 nacheinander mit ihrem Befestigungsende aus dem Magazin geschoben zu werden, um dann näher zur Heizeinrichtung 30 zu gelangen. Entweder die Heizeinrichtung 30 wird dann auf zwei geeignete, unterschiedliche Temperaturen aufgeheizt, oder unterschiedlich heiße Heizeinrichtungen 30 kommen für ihre jeweils zugeordneten Borstenbüschel zum Einsatz.

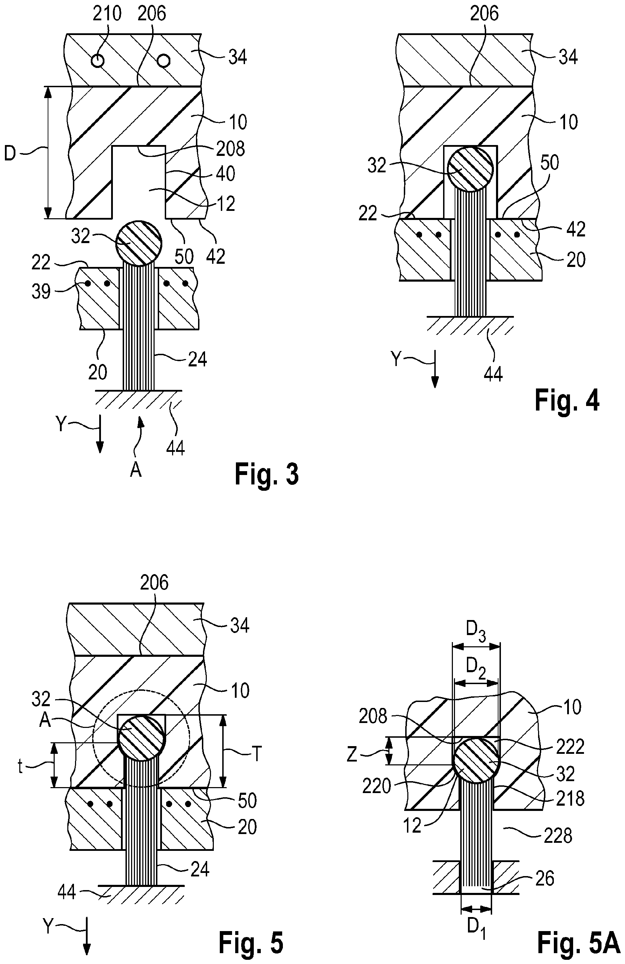

Das Herausschieben einzelner oder Gruppen von Borstenbüschel erfolgt z.B. mit einer geteilten Basisplatte 44 (siehe Figur 5), deren Teile unabhängig voneinander in Borstenlängsrichtung verfahrbar sind.

Bei einer Bürste mit Nylon und mit PBT Borsten werden z.B. zuerst die Borsten aus Nylon erhitzt und anschließend die aus PBT.

Noch in der Schmelzstation 16 oder auf dem Weg zur nachfolgenden Verankerungsstation 18 oder in der Verankerungsstation 18 können optional die Verdickungen 32 aktiv gekühlt werden. Dies erfolgt beispielsweise durch einen über einen Ventilator herangeführten Kaltluftstrom 214 (siehe Figur 1d) oder dadurch, dass die Station 1d als Kältekammer ausgebildet ist, durch die hindurch das Magazin 20 mit den noch rückseitig weichen Verdickungen 32 hindurchgeführt wird. Durch die Kühlung der Verdickungen 32 kann die Taktzeit erhöht werden.

Das Magazin 20 transportiert die Borstenbüschel 24 weiter in die nachfolgende Verankerungsstation 18. Diese Verankerungsstation sorgt dafür, dass die Borstenbüschel 24 in den Verankerungsöffnungen 12 des Borstenträgers 10 ausschließlich ankerlos bleibend arretiert werden.

Die Verankerungsstation 18 umfasst zumindest eine Halterung 34 (vorzugsweise mehrere Halterungen 34), die an ihrer der Stirnseite 22 gegenüberliegenden Stirnseite 36 (siehe Figur 2) eine Ausnehmung 38 (bei mehreren aufzunehmenden Borstenträgern 10 mehrere Ausnehmungen) besitzt, welche komplementär zur entsprechenden Form des Borstenträgers 10 ausgebildet ist, sodass dieser flächig mit seiner Rückseite an der Halterung 34 aufliegt (siehe auch Figur 14).

Die Halterung 34 selbst hat eine ebene Stirnseite 36, gegenüber welcher jedoch der Borstenträger 10 etwas vorsteht, wie Figur 2 zeigt, um in die zum Bereich der Vorderseite des Borstenträgers 10 komplementäre Vertiefung 200 im Magazin 20 hineinzuragen, wie dies beispielsweise in Figur 14 gezeigt ist.

Das Magazin 20 ist beheizbar, beispielsweise entweder durch eine von außen zugeführte Plattenheizung, die in der Verankerungsstation 18 seitlich an das Magazin 20 herangefahren wird und dieses, da das Magazin 20 aus Metall besteht, schnell aufheizen kann.

Alternativ hierzu ist im Magazin 20 eine Heizung, insbesondere eine elektrische Widerstandsheizung 39 ausgebildet, die in Figur 2 und in Figur 14 dargestellt ist. Die Heizwindungen sind symbolisch angedeutet, sie liegen nahe an der Stirnseite 22 bzw. bei einer Vertiefung 200 nahe des Bodens 202 der Vertiefung 200, der einen Teil der Stirnseite 22 darstellt.

Elektrische Anschlusskontakte 41, beispielsweise Schleifkontakte an einer Seitenfläche des Magazins 20, ermöglichen es, beim Hereinfahren des Magazins 20 in die Verankerungsstation 18 das Magazin 20 elektrisch anzukoppeln, um die Heizung 39 zu aktivieren. Selbstverständlich ist es auch denkbar, dass die Stirnseite 22 inklusive des Bodens 202 der Vertiefung 200 selbst eine elektrische Widerstandsheizschicht darstellt, sodass hier unmittelbar die Stirnseite geheizt ist.

Wenn das Magazin 20 feststehend ist, ist der elektrische Anschluss für die Heizung sehr einfach realisierbar, er kann permanent ausgebildet sein.

Die Heizung 39 sorgt dafür, dass vorzugsweise die gesamte Stirnseite 22, die mit dem Borstenträger 10 in Kontakt kommt, beheizt wird, das heißt auch die Abschnitte zwischen den Verdickungen 32.

Die Temperatur, auf die die Stirnseite 22 (im Bereich des Kontakts mit dem Borstenträger 10) dabei gebracht wird, liegt unterhalb der Schmelztemperatur des Borsten- und/oder des Borstenträgermaterials, vorzugsweise beider Materialien. Insbesondere liegt sie bei höchstens 85 % gerechnet in ° C der jeweiligen Schmelztemperatur dieser Materialien. Haben beispielsweise beide Materialien eine Schmelztemperatur von 100 °C, so liegt die Temperatur des endgültig aufgeheizten Magazins 20 an der Stirnseite 22 bei höchstens 85 °C.

Figur 3 zeigt eine Schnittansicht durch die Verankerungsstation 18 in Figur 1e, bevor das Magazin 20 und der Borstenträger 10 aufeinander zu gefahren werden.

Die Verdickung 32 hat eine solche Abmessung, gesehen in Längsrichtung A (auch Axialrichtung oder Zustellrichtung genannt), dass sie kleiner als der entsprechende Querschnitt der Verankerungsöffnung 12 ist, sodass sie, ohne an den innenseitigen Rand 40 der Verankerungsöffnung 12 anzustoßen oder den Rand 40 zu kontaktieren, in die Verankerungsöffnung 12 eingeschoben werden kann. Insbesondere hat die zylindrische Verankerungsöffnung 12 zu diesem Zeitpunkt lediglich ein Übermaß von maximal 0,2 mm, insbesondere maximal 0,15 mm gegenüber dem größten Querschnitt der Verdickung 32 (Befestigungsende).

Das permanent, d.h. während des gesamten Betriebs auf die gewünschte Temperatur erhitzte Magazin 20 und/oder die Halterung 34 werden relativ zueinander aufeinander zu bewegt, im vorliegenden Fall wird nur die Halterung 34 mit dem Borstenträger 10 bewegt, sodass zuerst die Verdickung 32 in die Verankerungsöffnung 12 gelangt, bevor die Stirnseite 22 die ihr zugewandte ebene Stirn- und Vorderseite 42 des Borstenträgers 10 kontaktiert. Während der Zustellbewegung wird der Borstenträger 10 so gut wie überhaupt nicht erwärmt, solange der Borstenträger 10 nicht von dem Magazin 20 kontaktiert wird, da die Zustellbewegung sehr rasch erfolgt und keine Verweilzeit in der in Figur 3 dargestellten geöffneten Position der Verankerungsstation 18 vorhanden ist.

Eine Basisplatte 44 (siehe Figur 3), auf welcher sämtliche Borstenbüschel 24 mit ihren vorderseitigen, stirnseitigen, freien Enden aufliegen und die eine Abstützung bildet, kann dazu dienen, die Borstenbüschel 24 an ihrem vorderen Ende zueinander auszurichten und gleichzeitig einen Abstand, falls dies gewünscht ist, zwischen der Verdickung 32 und der Stirnseite 22 zu schaffen. Die Basisplatte 44 dient als Abstützung für die einzelnen Borsten und für die Borstenbüschel 24.

In Figur 4 ist gezeigt, dass die Stirnseite 22 die Vorderseite 42 des Borstenträgers 10 kontaktiert und damit den Borstenträger 10 an der gesamten Kontaktfläche zwischen beiden Teilen aufheizt.

Der Borstenträger 10 ist aus thermoplastischem Material, insbesondere aus den zuvor bereits erwähnten Kunststoffen, wie Polypropylen, ABS, PA, PBT, PET oder PC.

Die Bewegung der Halterung 34 verharrt jedoch nicht in der Position des ersten Kontaktes, der in Figur 4 dargestellt ist, denn über die Halterung 34 und das Magazin 20 wird ein sehr hoher Druck auf den Borstenträger 10 aufgebracht.

Beispielsweise wird mit dem Aufeinanderzufahren ein Druck von mindestens 200 bar, vorzugsweise mindestens 400 bar auf den Borstenträger 10 ausgeübt. Dieser Druck wird bereits ab dem ersten Kontakt von Borstenträger 10 und Magazin 20 aufgebracht und bleibt über die Einwirkzeit (Kontaktzeit) gleich.

Dieser Druck wird bei gleichzeitiger Erwärmung des Borstenträgers 10 über eine Einwirkzeit von wenigstens 4 Sekunden, insbesondere wenigstens 5 Sekunden und maximal 15 Sekunden, insbesondere maximal 10 Sekunden aufrechterhalten.

Die Einwirkzeit setzt sich zusammen aus einer Haltezeit und einem Zeitabschnitt (Kompressionszeit genannt) während der Zustellbewegung, der dann beginnt, wenn die Vorderseite 42 vom Magazin 20 und gleichzeitig die Rückseite des Borstenträgers 10 von der Halterung 34 kontaktiert wird. Die Kompressionszeit endet, wenn die maximal zusammengefahrene Position erreicht ist und der Abstand von Halterung und werkzeugteil für die Haltezeit konstant gehalten wird. Die Haltezeit ist diejenige Zeit, in der die Zustellbewegung beendet ist, d.h. die Vorrichtung komplett geschlossen ist, und der Borstenträger 10 in der geschlossenen Kavität aufgenommen ist. Diese Haltezeit beträgt vorzugsweise wenigstens 1 Sekunde, vorzugsweise wenigstens 1,5 Sekunden und/oder maximal 3 Sekunden, insbesondere maximal 2,5 Sekunden.

Während der Kompressionszeit wird der Abstand der Halterung zum Werkzeugteil extrem langsam und mit konstanter Geschwindigkeit reduziert. Beispielsweise wird eine Gesamtkompressionsstrecke von 0,3 mm in schnellstens 3 Sekunden zurückgelegt.

Während der Einwirkzeit wird das Magazin 20 vorzugsweise weiterhin beheizt, wobei unter Umständen die große Masse des Magazins 20 es auch erlauben würde, nach der ersten Aufheizung auf die Betriebstemperatur die Zuheizung zu stoppen. Trotzdem würde während der Einwirkzeit weiterhin eine Erwärmung des Borstenträgers 10 stattfinden.

Die Vorrichtung wird insbesondere auf Block gefahren, d.h., die Halterung 34 kontaktiert außerhalb der durch die Ausnehmung 38 und die Vertiefung 200 gebildeten Kavität mit einer Stirnseite 36 (siehe Figur 14) den Abschnitt der Stirnseite 22 außerhalb der Vertiefung 200. In diesem Kontaktbereich ist kein Spalt vorgesehen, in den von der Kavität aus Material eindringen könnte, vielmehr wird die Kavität durch einen ringförmig umlaufenden Kontaktbereich abgedichtet.

Im Übrigen ist vorzugsweise generell, nicht nur auf die gezeigte Ausführungsform begrenzt, keine Heizung im Kontaktbereich zwischen Halterung 34 und Magazin 20 vorhanden, so dass die Heizung nur im Bereich des Kontaktes zwischen Vorderseite 42 und Magazin 20 vorhanden ist und wirkt.

Die Trennebene zwischen Halterung 34 und Werkzeugteil (hier Magazin 20), die durch die Stirnseite 36 definiert wird, liegt vorzugsweise näher an der Vorderseite 42 als der Rückseite des Borstenträgers 10. Genau gesagt liegt die Trennebene knapp oder unmittelbar angrenzend an einen gerundeten Übergang zwischen der die Vorderseite 42 und die Rückseite verbindenden Seitenfläche 212.

Es ist vorteilhaft, wenn die Abstützung in Form der Basisplatte 44 zumindest während der letzten Phase des Aufbringens der Druckkraft, also am Ende der Einwirkzeit entfernt wird und nicht mehr die Borsten kontaktiert. Dies verbessert die Ausrichtgenauigkeit der Borsten sowohl zueinander als auch relativ zum Borstenträger 10. Bevorzugt wird jedoch die Basisplatte 44 bereits vor Beginn der Haltezeit oder sogar noch vor der Einwirkzeit entfernt, wie dies in den Figuren 3-5 symbolisch mit dem Pfeil Y dargestellt ist. Beispielsweise wird die Basisplatte 44 lediglich in der Station c) und gegebenenfalls d) gemäß Figur 1 eingesetzt.

Um jedoch die axiale Lage der Borstenbüschel und der einzelnen Borsten auch während der gesamten Einwirkzeit festlegen zu können, sind der Querschnitt der Aufnahmeöffnung 26 und der Querschnitt des darin eingeschobenen Borstenbüschels 24 so aufeinander abgestimmt, dass das Borstenbüschel 24 in der Aufnahmeöffnung 26 geklemmt und damit axial sicher positioniert ist. Durch das Eigengewicht oder auch durch die Trägheit während der Bewegung innerhalb der Stationen und von Station zu Station wird das Borstenbüschel 24 nicht verschoben.

In dem genannten Beispiel wird die gesamte ebene Stirnseite, zumindest wo Kontakt mit dem Magazin 20 an der Vorderseite 42 des Borstenträgers 10 vorhanden ist, aufgeheizt. Wenn das Magazin 20 eine Vertiefung 200 hat, reicht es und ist es vorteilhaft, wenn nur im Bereich des Bodens 202 der Vertiefung 200 die Heizung angebracht ist. Nachdem das Magazin 20 jedoch üblicherweise aus Stahl ist, wird das gesamte Magazin 20 erwärmt. Bei den Temperaturen, die jedoch eingestellt werden, geht es darum, die Vorderseite 42 des Borstenträgers 10 auf die gewünschte Temperatur zu bringen.

Die Temperatur, auf die der Borstenträger im Bereich der Vorderseite 42 während der Einwirkzeit aufgeheizt wird, liegt unterhalb der Schmelztemperatur des Borsten- und/oder Borstenträgermaterials, insbesondere bei oder niedriger als 85 % der jeweiligen Schmelztemperatur, gerechnet in ° C. Damit entspricht diese Temperatur der zuvor genannten maximalen Betriebstemperatur des Magazins 20 im Bereich der Stirnseite 22 bzw. des Bodens 202.

Alternativ hierzu kann zumindest der Rand 50 der Verankerungsöffnung 12 im Bereich der Vorderseite 42 aufgeheizt werden, der den Bereich der Wand der Verankerungsöffnung 12 bildet, der an der Mündung zur Vorderseite 42 angrenzt.

Die Temperatur, auf die der Borstenträger 10 zumindest im Bereich des Randes 50, vorzugsweise im gesamten Kontaktbereich mit dem Magazin gebracht wird, sollte nicht nur unter oder deutlich unter der Schmelztemperatur der Materialien liegen, sondern in einem Bereich der Glasübergangstemperatur des Borstenträgermaterials. Mit extrem hohem Druck, der z.B. über 600 bar liegt, wäre es möglich, den Borstenträger 10 im Bereich der Vorderseite 42, zumindest im Bereich des Randes 50, nur auf eine Temperatur zu erwärmen, die über einer Grenztemperatur liegt, welche 60 % in ° C, insbesondere 80 % in ° C der Glasübergangstemperatur des Borstenträgermaterials beträgt, wenn das Borstenträgermaterial eine Glasübergangstemperatur von größer gleich 300° K hat. Bevorzugt liegt diese Grenztemperatur jedoch bei oder minimal über der Glasübergangstemperatur. Bei einem Borstenträgermaterial mit einer Glasübergangstemperatur von kleiner 300° K liegt die Aufheiztemperatur maximal 50 % über der Glasübergangstemperatur in ° K gerechnet.

Eine weitere Variante sieht vor, dass die Aufheizung zumindest des Randes 50 der Vorderseite 42, insbesondere der gesamten Kontaktfläche des Borstenträgers 10 im Bereich der Vorderseite 42 auf eine Temperatur aufgeheizt wird, die zumindest 30 °C über der Umgebungstemperatur liegt, insbesondere bevor der Rand 40 im Inneren der Verankerungsöffnung 12 über die Umgebungstemperatur durch das Magazin 20 aufgeheizt wird.

Wie in den Figuren zu sehen ist, hat das Magazin 20 keinerlei Fortsätze oder dergleichen, mit denen es in die Verankerungsöffnung 12 hineinragen würde, da es eine ebene Stirnseite 22 bzw. einen ebenen Boden 202 im Bereich der Vorderseite 42 besitzt.

Da auch die Vorderseite 42 eben ist und im Bereich der Mündung der Verankerungsöffnung 12, das heißt im Bereich des Randes 50, kein Kragen oder dergleichen vorhanden ist, wie dies im Stand der Technik der Fall war, wird während des Aufbringens von Druck und Temperatur das Borstenträgermaterial im Bereich der Vorderseite 42 ganzflächig verformt. Das Material möchte ausweichen und wandert damit in die Verankerungsöffnungen 12 im Bereich der Mündung und schnürt diese ein.

Durch das Aufbringen von Wärme und Druck wird die gesamte Dicke D und damit die Maximaldicke des Borstenträgers 10 im Bereich der Mündung der Verankerungsöffnung 12 zur Vorderseite 42 bleibend reduziert. Es entsteht eine Art Einschnürung, die das verdickte Befestigungsende in Auszugsrichtung hintergreift und damit das Borstenbüschel 24 sichert.

Eine Adhäsion zwischen dem verdickten Befestigungsende und der Wand der Verankerungsöffnung 12 entsteht nicht.

Die Umformung des Randes muss nicht extrem sein. Es hat sich herausgestellt, dass es beispielsweise bei Zahnbürsten ausreichend ist, den Querschnitt der Verankerungsöffnung 12 mit der ursprünglichen Breite oder dem ursprünglichen Durchmesser D3 im Bereich des Randes 218 (siehe Figur 5A) nur soweit auf eine Breite oder einen Innendurchmesser D1 zu verkleinern, dass die Differenz der Breite oder des Durchmessers D2 der dicksten Stelle der Verdickung 32 (bezogen auf die jeweilige Querschnittsebene) zur Breite oder zum Durchmesser D1 im Bereich des Randes 218 nur etwa 0,1-0,5 mm beträgt.

Es ist vorteilhaft, wenn die Verdickung 32 ein Untermaß gegenüber der noch unverformten Verankerungsöffnung 12 beim Einschieben hat (d.h. D2 ist kleiner D3).

Dies ist jedoch nicht obligatorisch. Es kann beispielsweise sein, dass ein minimaler seitlicher Versatz der Verdickung 32 zur Verankerungsöffnung 12 vorhanden ist, obwohl die Verdickung 32 ein Untermaß besitzt und ein umlaufender Spalt zwischen der Verdickung an der dicksten Stelle und der Innenseite der Verankerungsöffnung 12 vorhanden sein sollte. Aufgrund des Versatzes kann die Verdickung beim Einschieben in die Verankerungsöffnung 12 an einer Seite mit der Wand der Verankerungsöffnung in Kontakt treten. Es kann in diesem Zusammenhang sinnvoll sein, dass das Material der Verdickung noch nicht bis ganz innen erstarrt ist, wenn die Verdickung 32 in die Verankerungsöffnung eingeschoben wird. Bildet die Verdickung beispielsweise an der Außenseite eine noch relativ dünne, erkaltete Haut und ist innen noch sehr weich, wird die Haut samt des Inneren der Verdickung einfach nach innen ausgelenkt, ohne dass die Verdickung selbst Schaden nimmt. Sie ist nach wie vor geeignet, von dem verformten Rand umfangsmäßig geschlossen hintergriffen zu werden.

Durch diese Idee, die Verdickung 32 in noch nicht ganz erstarrtem Zustand in die Verankerungsöffnung 12 einzuschieben ist es auch möglich, generell eine Verdickung 32 zu verwenden, die mit einem Übermaß gegenüber dem Querschnitt der Verankerungsöffnung 12 ausgebildet ist, d.h. D2 größergleich D3.

In Figur 5A ist der durch die Verankerungsöffnung 12 gebildete und durch den verengten Rand 218 nach außen abgegrenzte Raum zur Unterbringung der Verdickung 32 übertrieben dargestellt, ebenso wie die Verdickung 32 im Verhältnis zum Durchmesser D1 übertrieben dargestellt ist.

Tatsache ist jedoch, dass nicht die gesamte Wand, die die Verankerungsöffnung 12 bildet, an der Verdickung 32 bzw. an den außen liegenden Borsten, die von der Verdickung 32 ausgehen, anliegt. Vielmehr wird die Wand nur im Bereich des Randes 218 und in einem unmittelbar daran angrenzenden, sich nach außen in Richtung zum Boden 208 erweiternden Abschnitts 220 umgeformt und liegt nur in diesen Bereichen an den Borsten bzw. der Verdickung 32 an und übt einen Druck auf diese aus.

Die Verdickung sollte aber den Boden 208 kontaktieren, um die axiale Lage des Borstenbüschels genau festzulegen.

Im übrigen Bereich, beispielsweise zwischen Boden 208 und Verdickung 32 oder im Bereich des Umfangs der Wandung angrenzend an den Boden 208, gibt es einen oder mehrere Luftspalte 222 zwischen der Wand und der Außenseite der Verdickung 32, sodass diese in diesem Bereich nicht komprimiert, verklemmt und/oder verformt wird.

Im Bereich des Randes 218 erfolgt eine Verdichtung des Borstenbüschels 24 gegenüber ihrem Zustand im Magazin 20 durch das Verengen und Einschnüren des Randes 218 um mindestens 3 %, insbesondere mindestens 5 %. Hierbei wird die Querschnittsfläche der Aufnahmeöffnung im Magazin mit der Querschnittsfläche des Randes 218 an seiner engsten Stelle verglichen.

Sämtliche Verankerungsöffnungen 12 werden durch die dargestellte Vorrichtung und das entsprechende Verfahren gleichzeitig geschlossen und damit gleichzeitig alle Borstenbüschel 24 im Borstenträger 10 verankert.

Wie ferner in Figuren 4 und 5A zu sehen ist, wird nicht die gesamte Verankerungsöffnung umgeformt, sondern nur bis zu einer gewissen Tiefe t, die maximal 85 %, insbesondere 70 % der Gesamttiefe T der Verankerungsöffnung 12 entspricht und/oder die eine axiale Erstreckung von 0,5-1,3 mm, insbesondere 0,6-0,9 mm aufweist.

Die Verdickung 32 selbst wird vorzugsweise nur in axialer Richtung über maximal 50 % ihrer axialen Gesamtlänge in der Verankerungsöffnung geklemmt. Der Rest der Klemmung erfolgt im Bereich der von der Verdickung 32 ausgehenden Borsten.

Die Wand der Verankerungsöffnung 12 wird über eine Tiefe Z (siehe Figur 5A) von wenigstens 0,8 mm, beginnend vom Boden 208 nicht verformt und/oder klemmt die Verdickung 32 und auch die Borsten in diesem Bereich nicht.

Die Tiefe T der Verankerungsöffnung nach der Herstellung der Bürste beträgt maximal 4 mm, insbesondere maximal 2,7 mm.

Sämtliche Verankerungsöffnungen 12 sind Sacklöcher, sodass der Borstenträger 10 rückseitig nicht abgedeckt werden muss, da keine Teile der Borstenbüschel sichtbar sind oder auf dieser Seite vorstehen.

Die so geschaffene Verankerung ist die einzige Verankerung für die Borstenträger, es ist kein Metallanker oder Metalldraht notwendig.

Zu betonen ist generell, dies bezieht sich nicht nur auf die dargestellten Ausführungsformen, dass der Borstenträger 10 nicht nahe an seine Schmelztemperatur gebracht werden sollte, sondern von dieser deutlich entfernt nahe an die Glasübergangstemperatur. Insbesondere sollte die Aufheiztemperatur und damit auch die Temperatur an dem Magazin 20 im Bereich der Stirnseite 22 und dem Borstenträger 10 stirnseitig nicht höher als 15 % über der Glasübergangstemperatur des Borstenträgermaterials und/oder des Borstenmaterials liegen.

Bei Verwendung von PET wird gemäß einer bevorzugten Variante der Erfindung die Vorderseite 42 beim Umformen auf eine Temperatur von 75-95 °C, insbesondere 80-90 °C erwärmt, bei PP auf eine Temperatur von 105-125 °C, insbesondere 110-120 °C. Das PP wird insbesondere so ausgewählt, dass es einen Melt-Flow-Index (MFI) von 6-35, vorzugsweise 10-15 im Ausgangszustand besitzt.

Eine Ausführungsform der Erfindung sieht vor, dass die Stirnseite 22 und damit der Borstenträger 10 auf eine Temperatur von maximal 140 °C, insbesondere maximal 130 °C aufgeheizt werden, vorzugsweise im Bereich von 100 bis 115 °C aufgeheizt werden. Als Materialien werden hierbei insbesondere Polypropylen, PET, ABS, Copolyester und SAN für den Borstenträger verwendet.

Die Rückseite 206 des Borstenträgers 10 und der von der Rückseite 206 ausgehende Bereich bis zumindest zum Boden 208 der Verankerungsöffnungen 12 (vorzugsweise sogar noch weiter in Richtung zur Vorderseite 42) sollten nicht verformt werden. Um die Temperatur Grenze, ab der eine Verformung aufgrund des aufgebrachten Drucks stattfinden würde, möglichst nahe zur Vorderseite 42 des Borstenträgers 10 zu verschieben, kann die Halterung 34 mit einer aktiven Kühlung versehen sein.

In den Figuren 3 und 14 ist diese Kühlung durch Kühlkanäle 210 symbolisiert, durch die Kühlflüssigkeit strömt. Die Kühlkanäle 210 sind an einen Kühlwasserkreislauf angeschlossen, der kaltes Wasser vorzugsweise von unter 20°, insbesondere sogar von unter 10 °C, durch die Halterung 34 pumpt. Die Rückseite 206 wird somit während des Aufbringens der Druckkraft maximal 25 °C warm. Auch die die Vorderseite 42 und die Rückseite 206 verbindende Seitenfläche 212 (siehe Figur 14) des Borstenträgers 10 kann in der Halterung 34 ausreichend gekühlt werden, um nicht verformt zu werden und unterhalb der entsprechenden Temperatur zu bleiben, ab der eine Verformung und Deformation stattfinden würde.

Nach der vorgegebenen Einwirkzeit werden Halterung 34 und Magazin 20 wieder auseinandergefahren, sodass die Borstenbüschel 24 aus ihren Aufnahmeöffnungen 26 herausgezogen werden. Eine Nachbearbeitung in Form einer anderen Formgebung für den Borstenträger 10 ist nicht erforderlich.

Das Auseinanderfahren erfolgt aber vorzugsweise nicht in einem Stück, sondern es wird eine Ruhephase im Prozess des Auseinanderfahrens eingebaut. Hierzu werden Werkzeugteil, das heißt Magazin 20, und Halterung 34 minimal voneinander entfernt, sodass sich zwischen der Vorderseite 42 und der Oberseite des Werkzeugteils, das heißt des Magazins 20, ein kleiner Lüftungsspalt 228 (siehe Figur 5A) von größer gleich 0,5 mm ergibt. Wenn dieser vorgegebene Lüftungsspalt 228 in seiner Höhe erreicht ist, bleibt der Abstand für die Ruhephase, die wenigstens 1 Sekunde, insbesondere wenigstens 1,5 Sekunden beträgt, vorzugsweise konstant.

Optional kann in dieser Ruhephase auch Kühlluft zur Vorderseite des Borstenträgers 10 über den Lüftungsspalt 228 eingeblasen werden, um die Vorderseite zu kühlen.

Während dieser Ruhephase bleiben aber die Borsten in der Aufnahmeöffnung 26, wie dies Figur 5A zeigt. In der Ruhephase stabilisiert sich der umgeformte Bereich der Verankerungsöffnung, sodass die Borsten eines Büschels parallel zueinander und gleichmäßig gerichtet verlaufen.

Nach der Ruhephase wird die Vorrichtung auseinander gefahren, sodass der fertige Borstenträger entnommen werden kann.

Um die entsprechenden Bewegungen und Temperaturen exakt zu steuern, hat die Vorrichtung eine Steuerung 51, über die nicht nur die Heiztemperatur, sondern auch der aufgebrachte Druck sowie die Bewegungsabläufe gesteuert werden. Auch die Heizung 30 kann über dieselbe Steuerung 51 angesteuert werden.

Ist das Borstenträgermaterial ein Material wie bestimmte Polypropylenarten, bei denen die Glasübergangstemperatur nicht über der Umgebungstemperatur liegt, so kann eine Aufheizung des Borstenträgers entfallen, was jedoch nicht zwingend der Fall sein muss. Auch hier kann noch eine minimale Aufheizung knapp über der Glasübergangstemperatur vorteilhaft sein, jedoch auch wieder deutlich unterhalb der Schmelztemperatur. Wenn bei solchen Borstenträgermaterialien nicht aufgeheizt werden muss oder wird, so werden die Verankerungsöffnungen 12 ausschließlich durch Aufbringen des zuvor erwähnten Drucks über die zuvor erwähnte Einwirkzeit geschlossen. Dabei ist es möglich, Magazine 20 ohne Heizung zu verwenden oder dieselben Magazine mit Heizung, wobei die Heizung einfach nicht aktiviert ist.

Unabhängig vom Borstenträgermaterial gilt: Bei der Zustellbewegung vom Magazin 20 relativ zur Halterung 34 und damit zum Borstenträger 10 (die Relativbewegung der Teile heißt, eines oder beides dieser Teile kann in Richtung zum anderen Teil verfahren werden) kann eine druck- und zeitgesteuerte Zustellbewegung und/oder eine druck- und weggesteuerte Zustellbewegung vorteilhaft sein.

Insbesondere ist es von Vorteil, wenn in einer ersten Phase der Zustellbewegung der Rand 50 oder die gesamte Vorderseite 42 auf eine Temperatur erwärmt wird, die über einer Grenztemperatur liegt. Diese Grenztemperatur liegt 60 %, insbesondere 80 % unter der Glasübergangstemperatur des Borstenträgermaterials, in ° C bestimmt, wenn das Borstenträgermaterial eine Glasübergangstemperatur von über 300° K besitzt. Vorzugsweise liegt die Grenztemperatur jedoch bei einer Glasübergangstemperatur, allenfalls bis 20 % über der Glasübergangstemperatur in ° C. In einer anschließenden zweiten Phase der Zustellbewegung wird dann der Rand 50 verformt und der Rand 50 gegen die Borsten gedrückt.

Alternativ hierzu erfolgt die Zustellbewegung mit einer konstanten, geringen Geschwindigkeit, wenn der Borstenträger vorder- und rückseitig kontaktiert und damit axial komprimiert wird, und das Magazin 20 und die Halterung 34 werden auf Block aufeinander gefahren.

Auch bei der in der Figur 5 dargestellten Ausführungsform drückt im geschlossenen Zustand das Material im Bereich des Randes 50 gegen die Borsten, sodass kein Spalt zwischen Borsten und Rand 50 vorhanden ist.

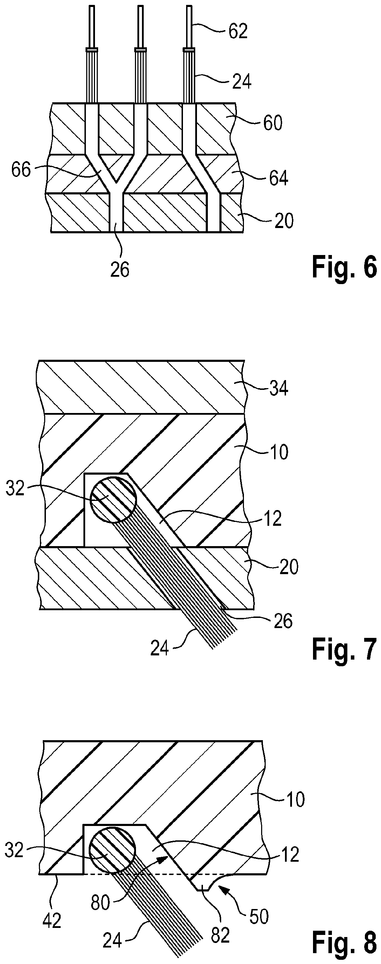

Die Bestückung des Magazins 20 kann entweder, wie in Figur 1a direkt über einen Borstenvereinzelner erfolgen, oder über eine andere Variante, die in Figur 6 dargestellt ist. Hier wird zuerst eine Kassette 60 mit zahlreichen Aufnahmeöffnungen mit Borstenbüscheln befüllt. Über diese Kassette können die vereinzelten Borstenbüschel dann auch gelagert werden, bis sie schließlich beispielsweise über bewegbare Stifte 62 in das Magazin 20 direkt eingedrückt werden.

Alternativ kann zwischen der Kassette 60 und dem Magazin 20 auch eine Umlenkplatte 64 vorhanden sein, die schräge Transportöffnungen 66 für durch sie hindurch bewegte Borstenbüschel 24 besitzt. Auch ist es möglich, über zusammenlaufende Transportöffnungen 66, wie in Figur 6 links dargestellt, mehrere Borstenbüschel 24 zu einem größeren Borstenbüschel zu vereinigen, wenn beispielsweise die Bürste verschieden dicke Borstenbüschel enthalten soll. Ferner kann natürlich auch das Magazin schräg verlaufende Aufnahmeöffnungen 26 besitzen, denn es gibt Bürsten, bei denen die Borstenbüschel nicht senkrecht zur Vorderseite 42 verlaufen, sondern schräg zu ihr angeordnet sind. Auch hier jedoch ist die Verankerung so wie in den Figuren dargestellt. Alternativ können dabei natürlich auch die Verankerungsöffnungen 12 für solche schräg gerichteten Borstenbüschel 24 leicht schräg ausgeführt sein oder konisch oder konisch nur im Bereich der auf sie zugeneigten Seite des Borstenbüschels 24, wie dies in Figur 7 dargestellt ist.

In Figur 8 ist eine Verankerungsöffnung gezeigt, die einen schräg zu seiner dem Werkzeugteil gegenüberliegenden Vorderseite 42 verlaufenden Randabschnitt 80 in ihrem Inneren aufweist. Der Borstenträger hat vor der Beaufschlagung des Borstenträgers durch das Werkzeugteil am stirnseitigen Rand 50 im Bereich des schräg verlaufenden Randabschnitts 80 einen gegenüber der Vorderseite 42 in Richtung zum Werkzeugteil vorstehenden Fortsatz 82 und ansonsten eine ebene Vorderseite 42.

Der Borstenträger 10 in den Figuren 9 und 10 wird in einer zur erfindungsgemäßen Vorrichtung gehörenden Spritzstation in einer Spritzgussform mit Spritzgussformhälften 100 und 102 hergestellt. Diese Spritzstation ist der zuvor beschriebenen Station zum Bestopfen des Borstenträgers 10 vorgeschaltet. Diese Spritzgussformhälften 100 und 102 bilden zwischen sich eine Kavität 104, in die flüssiger Kunststoff eingespritzt wird, um den Borstenträger 10 herzustellen. Während bei bislang verwendeten Spritzstationen die Spritzgussformhälfte 100 mit stiftförmigen, aktiven Schiebern versehen war, die durch die Spritzgussformhälfte 100 hindurch in die Kavität 104 hineinragten und vor dem Öffnen der Spritzgussform herausgezogen wurden, sieht diese Variante eine viel einfachere Lösung vor. Hier werden nämlich an die Spritzgussformhälfte 100 eine oder mehrere Fortsätze 106 unbeweglich angebracht, die in die Kavität 104 frei hineinragen. Diese Fortsätze 106 erzeugen dann die Verankerungsöffnungen 12. Die Tiefe der Verankerungsöffnungen 12 ist deutlich geringer als bei bisher hergestellten Borstenträgern, die mit der Ankertechnologie gestopft wurden. Alternativ kann der Boden der Spritzgußformhälfte 100 einen beweglichen Einsatz 107 (siehe unterbrochene Linien in Fig. 10) haben, an dem die Fortsätze 106 sitzen. Nach dem Spritzen wird zum leichteren Entformen der Einsatz 107 nach unten in eine Vertiefung in der Spritzgußformhälfte gezogen, so dass die Fortsätze auch den gespritzen Verankerungsöffnungen 12 herausgezogen werden, womit das anschließende Entnehmen der Borstenträger 10 vereinfacht ist.

Figur 9 zeigt verschiedene Varianten, wie der Borstenträger 10 ausgeführt sein kann. Es können nicht nur kreisrunde oder ovale Verankerungsöffnungen 12 vorgesehen sein, sondern beliebige Formen gestaltet werden. Beispielsweise sind längliche Öffnungen realisierbar, X-förmige, C- förmige oder beliebige anders gestaltete Verankerungsöffnungen. Diese großen Verankerungsöffnungen werden mit Borstenbüscheln bestückt, die aus mehreren, vereinzelten Borstenbüscheln zusammengesetzt sind, welche durch Schmelzen ihrer Enden zu einem großen Borstenbüschel verbunden werden. Solche großen Borstenbüschel ergeben eine entsprechende wandförmige Borstenstruktur.

Zu betonen ist, dass die erfindungsgemäße Vorrichtung und das erfindungsgemäße Verfahren nicht nur mit mehreren Borstenbüscheln, sondern auch nur mit einem Borstenbüschel, beispielsweise zur Erzeugung eines Pinsels verwendet werden können und zur Befestigung nur einer oder nur einzelner Borsten in einem Borstenträger.

Die Verankerungsöffnungen 12 müssen also generell nicht zwingend nur zur Aufnahme und Fixierung von Borstenbüscheln dienen, vielmehr lassen sich vorgefertigte, aus beliebigen elastomeren Kunststoffen gefertigte, singuläre Borsten beliebiger Form exakt wie zuvor im Zusammenhang mit Borstenbüscheln beschrieben aufnehmen und fixieren. Diese Borsten können eine plattenförmige Gestalt haben und lassen sich beispielsweise in die länglichen Verankerungsöffnungen 12 einbringen und darin durch Umformen des Randes der Verankerungsöffnungen 12 einbetten. In die C-förmige Verankerungsöffnung 12 wird beispielsweise ein im Querschnitt C-förmiges, vorab gespritztes Reinigungselement als singuläre Borste eingesetzt. Zusätzlich lassen sich natürlich auch Borstenbüschel 24 bestehend aus zahlreichen Borsten 24' in den Borstenträger 10 einsetzen. Die singulären Borsten 24' können z.B. auch mitten in einem Feld von Borstenbüscheln 24 positioniert sein oder umgekehrt einzelne oder mehrere Borstenbüschel 24 umgeben.

Zu betonen ist, dass die vorgenannten Merkmale, die anhand der Borstenbüschel erläutert wurden, auch für singuläre, große Borsten verwendet werden können. Nur als ein Beispiel sei eine schräg zu dem Borstenträger 10 verlaufende, plattenförmige Borste genannt, die in die schräge Verankerungsöffnung 12 in den Figuren 7 und 8 eingesetzt und darin verankert wird. Die singuläre Borste kann jedoch auch ein Verankerungsende 32 haben, von dem der längliche Rest abgewinkelt absteht, so dass sie in eine zylindrische Verankerungsöffnung 12 gemäß Figur 4 eingeschoben werden kann, wobei die Borste außerhalb der Verankerungsöffnung 12 jedoch schräg verläuft.

Die singuläre, separat hergestellte Borste 24' oder Borsten 24' wird bzw. werden vorzugsweise gleichzeitig mit den Borstenbüscheln 24 durch Umformen der entsprechenden Ränder der Verankerungsöffnungen 12 im Borstenträger 10 fixiert. Alternativ hierzu ist es möglich, mehrere separate, nacheinander erfolgende Umformvorgänge für die unterschiedlichen Borsten bzw. Borstenbüschel durchzuführen. Dabei können gegebenenfalls auch unterschiedliche Drücke und/oder Temperaturen durch das oder die beheizten Werkzeugteile aufgebracht werden, weil die Borsten oder Borstenbüschel aus unterschiedlichem Material sind.

Zusätzlich oder alternativ zu den obigen Varianten können elastomere Reinigungselemente 108 beispielsweise am Rand des Borstenträgers 10 angespritzt sein. Diese Reinigungselemente 108 sind nicht vorgefertigt, sie stehen aber ebenfalls vorderseitig gegenüber dem Borstenträger 10 vor und dienen zur Massage des Zahnfleisches.

Der Borstenträger 10 kann hierfür beispielsweise am Rand Löcher oder nur randseitige Ausnehmungen besitzen, in die die Reinigungselemente 108 eingespritzt werden. Ferner lässt sich auch, wie bei Bürsten immer mehr üblich, die Rückseite des Borstenträgers 10 mit einem weicheren Kunststoff umspritzen.

In letzterem Fall bietet es sich an, dass die Reinigungselemente 108 einstückig in die rückseitige Schicht aus weicherem Kunststoff übergehen. Wie anhand der oberen Hälfte in Figur 9 dargestellt, die eine Variante zur unteren Hälfte zeigt, kann diese rückseitige Schicht aus weicherem Kunststoff auch eine Art Rahmen um den härteren Kunststoff des Borstenträgers 10 bilden, um beispielsweise als Dämpfer zu wirken.

Eine weitere Variante besteht darin, dass der Borstenträger 10, hier der Kopf der Zahnbürste, über ein Scharnier 110 aus weicherem Kunststoff mit dem Hals des Bürstenkörpers gekoppelt ist.

Generell gilt für sämtliche Varianten, dass der Borstenträger ein Plättchen als ein Teil des späteren Bürstenkörpers oder der gesamte Bürstenkörper sein kann. Beispielsweise kann der Borstenträger auch ein Mehrkomponenten-Spritzgussteil sein, welches dann bereits den fertigen Bürstenkörper bildet, wenn die Borsten abschließend eingebettet werden. Umgekehrt ist es jedoch auch möglich, in ein Teil des Bürstenkörpers, der dann den Borstenträger bildet, bereits die Borsten einzubetten und diesen beborsteten Borstenträger dann nachträglich zu umspritzen.

Demzufolge kann die Spritzstation auch als Mehrkomponenten-Spritzstation ausgeführt sein, oder es können mehrere Spritzstationen vorgesehen sein, zwischen denen dann die Station liegt, in der die Borsten verankert werden.

Die Reinigungselemente 108 und/oder die singulären, vorgefertigten und in ihrer Querschnittsform beliebigen Borsten aus elastomerem Material erstrecken sich nach vorne vorzugsweise mindestens so weit wie die Borstenbüschel, sie können aber auch über diese hinaus stehen oder kürzer als diese sein.

In Figur 11 ist dargestellt, dass nicht nur, wie zuvor bereits erläutert, Borstenbüschel 24 mit ihrer Verdickung 32 am Befestigungsende in die Verankerungsöffnung 12 eingesetzt und darin durch Umformen des Randes verankert werden, sondern dass singuläre, vorgefertigte Borsten 24' (beliebiger Form sowohl in Seitenansicht als auch im Querschnitt gesehen) durch das vorgenannte Verfahren und die vorgenannte Vorrichtung im Borstenträger ankerlos eingebettet werden können. Die Borsten 24' sind aus einem elastomeren Material, insbesondere TPE, gespritzt.

Die Borsten 24' haben in ihrem aus dem Borstenträger 10 herausragenden Abschnitt eine größte Wanddicke d (im Querschnitt gemessen), der größer als 0,6 mm, insbesondere größer 0,9 mm ist.

Ferner können oder sollten die vorgefertigten Borsten 24' ein verdicktes Befestigungsende 32' aufweisen, dessen Höhe geringer ist als die Tiefe der zugeordneten Verankerungsöffnungen 12, sodass der nach innen umgeformte Rand die Befestigungsenden 32' umgreift, um eine formschlüssige Halterung zu erreichen. Die Befestigungsenden 32' sind beispielsweise flache Zylinder, deren Form der Form der Verankerungsöffnung 12 angepasst ist. Die Außenabmessungen des jeweiligen Befestigungsendes 32' sind jedoch so auf den Querschnitt der Verankerungsöffnung 12 abgestimmt, dass beim Einsetzen ein seitlicher Spalt zwischen dem Befestigungsende 32' und der Wand der Verankerungsöffnung 12 vorhanden ist, bevor die Umformung stattfindet.

Das Befestigungsende 32' kann aus einem anderen Material, insbesondere einem härteren Material als der Rest der Borste 24' sein. Ein Beispiel hierfür wäre ein Befestigungsende 32' aus Polypropylen. Auch kann nur ein Kern der Borste 24' aus einem härteren Material bestehen, der dann anschließend mit einem weicheren Material umspritzt wird. So wäre eine Scheibe aus härterem Material denkbar, die das gesamte oder einen Kern des Befestigungsendes 32' bildet.

Ebenso könnte gemäß Figur 12 links die den Kern bildende Scheibe 112 einen einstückig daran angeformten Fortsatz 114 haben, welcher in den Teil der Borste 24' ragt, der außerhalb des Borstenträgers 10 liegen wird.

Die in Figur 12 rechts dargestellte Variante einer Borste 24' ist mit einem Befestigungsende 32' aus einem harten Kunststoff und einem daran angespritzen Abschnitt 118 aus einem weicheren Kunststoff ausgebildet.

Die in Figur 12 dargestellten singulären Borsten 24' sind spitz zulaufend, was nicht einschränkend zu verstehen ist.

Bei einer Zahnbürste sind beispielsweise häufig auf der Rückseite des Borstenträgers elastomere Bereiche, die weiter als der Rest des Borstenträgers 10 ist, aufgespritzt, die als Zungenreiniger dienen, wie dies in Figur 15 dargestellt ist. Das Elastomer 232 kann Noppen oder Rippen aufweisen. Die Ausnehmung 38 in der Halterung 34 ist im Bereich der Außenoberfläche des Elastomers 232 komplementär zur Form des Elastomers 232 im nicht zusammengedrückten Zustand ausgebildet. Jedoch ist das Volumen, welches dem Elastomer 232 für den komprimierten Zustand (geschlossener Zustand der Vorrichtung, siehe Figur 15) zugestanden wird, geringer als in unbelastetem Zustand. Das bedeutet, die dem Elastomer 232 zugestandene Höhe ist auf die Komprimierung unter dem gewünschten Druck reduziert. Optional kann beim Verformen sogar der gesamte Gegendruck über das Elastomer 232 von der Halterung 34 in den Borstenträger 10 eingeleitet werden.

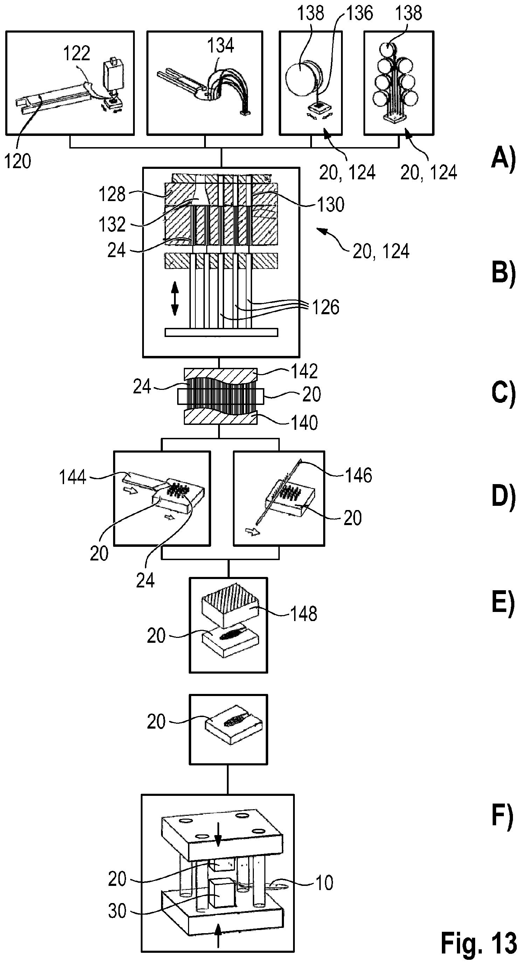

In Figur 13 ist eine komplette Vorrichtung mit verschiedenen Stationen dargestellt. Zu betonen ist, dass die erfindungsgemäße Vorrichtung nicht sämtliche Stationen, die nachfolgend erläutert werden, aufweisen muss.

Insbesondere sind sämtliche Varianten und Details, die anhand der vorhergehenden Figuren erläutert wurden, insbesondere anhand von Figur 1, auch bei dieser Ausführungsform einzeln oder in Kombination realisierbar, egal ob dies z.B. die Kühlung, die Lüftung usw., ebenso wie die zuvor erwähnten Temperaturen, Temperaturbereiche oder Zeiten und die verwendeten Materialien sind.

In Station A werden Borsten oder Borstenbüschel vereinzelt und weiter transportiert. Das linke Bild zeigt einen sogenannten Faserkasten 120, aus welchem fertige Borsten, die mechanisch oder chemisch angespitzt sein können, durch einen Büschelvereinzelner 122 in Büscheln entnommen werden.

Diese Borstenbüschel 24 werden über eine Transportvorrichtung zu einer Station B transportiert, in der die Borstenbüschel 24 dann gegebenenfalls bereits in die endgültige Büschelgeometrie und in das Lochbild der späteren Bürste überführt werden.

Beispielsweise werden die Borstenbüschel 24 in ein erstes Zwischenmagazin 124, insbesondere in Form einer Platte, eingeschoben. Über das Zwischenmagazin 124 werden die Borstenbüschel 24 mittels Stößel 126 dann unter Umständen in eine weitere Platte 128 geschoben, in welcher gegebenenfalls Umform- oder Umlenköffnungen 130 oder Öffnungen 132 zum Zusammenführen mehrerer Borstenbüschel 24 zu einem gemeinsamen größeren Borstenbüschel oder zum schrägen Ausrichten von Borstenbüscheln 24 vorhanden sind.

Die Borstenbüschel 24 werden anschließend noch weiter in das Magazin 20 geschoben. Im Magazin 20 ist dann vorzugsweise die Lochgeometrie der späteren Bürste verwirklicht, was jedoch nicht zwingend der Fall sein muss, wie später noch erläutert werden wird.

Gegebenenfalls jedoch kann nämlich die Platte 128 und/oder das Zwischenmagazin 124 auch entfallen, sodass die Borstenbüschel 24 direkt in das Magazin 20 transportiert werden. Dies alles ist abhängig von der gewünschten endgültigen Büschellage oder Büschelgeometrie und des Lochbildes der fertigen Bürste.

Der Transport der Borstenbüschel 24 nach der Vereinzelung kann mechanisch über Schieber oder die in Figur 2 gezeigten Stößel 126 in das erste Zwischenmagazin 124 und/oder das Magazin 20 in Station B erfolgen. In Station A ist als weitere Alternative in dem zweiten Bild von links dargestellt, dass die vereinzelten Borstenbüschel über Röhren oder Schläuche 134, in denen ein Überdruck oder ein Unterdruck angelegt wird, in das Zwischenmagazin 124 oder das Magazin 20 gefördert werden.

Egal, welches Transportmittel für die Borstenbüschel verwendet wird, die können einzeln nacheinander, gruppenweise nacheinander oder alle gleichzeitig zugeführt und/oder in das Magazin 20 eingeschoben werden.

Eine dritte Alternative in Station A zeigt einen aufgewickelten Strang 136 aus parallelen Filamenten. Der Strang 136 ist auf eine Rolle 138 aufgewickelt und wird von ihr stetig abgewickelt. Das Ende des Strangs 136 wird in Öffnungen in einem Zwischenmagazin 124 oder dem Magazin 20 eingeschoben und anschließend abgeschnitten. Nach dem Abschneiden der Enden des Strangs entstehen abgelängte Borstenbüschel 24. Beispielsweise durch einen verfahrbaren X-Y-Tisch wird dann einerseits die Spule oder das in einer beweglichen Führung aufgenommene Ende des Strangs relativ zum Magazin 20 oder Zwischenmagazin 124 oder andererseits das Magazin 20/Zwischenmagazin 124 relativ zum Ende des Strangs verschoben, sodass sämtliche Öffnungen im Magazin 20 oder Zwischenmagazin 124 nacheinander befüllt werden. Ferner können auch mehrere Spulen und Stränge relativ zum Magazin 20/Zwischenmagazin 124 bewegt werden. Anschließend wird das komplett befüllte Magazin 20 oder Zwischenmagazin 124 aus dieser Station heraus bewegt und in die Station B oder direkt in Station C transportiert. In Station B drücken die Stößel 126 die Borstenbüschel 24 in das Magazin 20.

Um sich den X-Y-Tisch zu sparen, können auch von mehreren Rollen 138 gleichzeitig Stränge in die einzelnen Öffnungen in das Magazin 20 oder das Zwischenmagazin 124 transportiert und danach abgeschnitten werden.

Die Station C ist eine sogenannte Profilierstation. Hier werden die Borstenbüschel 24 axial verschoben, damit die späteren Enden der Büschel, mit denen gebürstet wird, in einer Ebene liegen oder, allgemeiner gesprochen, in einer vorbestimmten, beliebigen Fläche enden.

In der dargestellten Ausführungsform ist eine Wellenform vorgegeben, weshalb eine Anschlagplatte 140 mit einer komplementären Wellenform vom Magazin 20 beabstandet wird. Die Borstenbüschel 24 werden dann durch eine Andrückplatte 142, welche vorzugsweise eine zur Oberfläche der Anschlagplatte 140 komplementäre Form besitzt, nach unten gedrückt, bis alle Büschelenden an der Anschlagplatte 140 anliegen.

Die Station C kann jedoch gegebenenfalls auch entfallen, wenn das gewünschte Profil bereits in Station B durch geeignete unterschiedlich lange oder gleich lange Stößel 126 erreicht werden kann. Die beiden Varianten können auch miteinander vermischt werden, indem in Station B eine sogenannte Vorprofilierung durch unterschiedlich lange Stößel 126 und danach eine Feinprofilierung in Station C durch die Anschlagplatte 140 erfolgt.

Station D ist eine Schneidestation, in der die hinteren Enden der Borstenbüschel abgeschnitten werden, um in der nachfolgenden Station ein optimales Schmelzen der Büschelenden zu erreichen. Die möglicherweise unterschiedlich weit rückseitig gegenüber dem Magazin 20 abstehenden Borstenbüschel 24 werden mechanisch mittels eines Messers 144 oder thermisch mit einem heißen Draht 146 relativ nahe an dem Magazin 20 abgeschnitten. Gegebenenfalls kann bei Verwendung eines mechanischen Messers 144 das Magazin 20 auch als Gegenmesser wirken. In diesem Fall werden die Borstenbüschel 24 nach dem Abschneiden noch etwas rückseitig aus dem Magazin 20 herausgeschoben, damit sie gegenüber diesen etwas überstehen.

Gegebenenfalls kann Station D entfallen, wenn die Büschelenden bereits nach Station B oder C gleichmäßig weit rückseitig gegenüber dem Magazin 20 vorstehen. Dies ist insbesondere dann der Fall, wenn die vorderseitigen Büschelenden in einer Ebene enden sollen.

Der überstehende Abschnitt der Borstenbüschel 24 wird dann in der Station E geschmolzen, so dass alle Filamente eines Büschels miteinander verbunden sind, und zwar über das dann entstehende pilzförmige, verdickte Büschelende. Die Dicke der Büschelenden wird durch die Menge des Materials an Filamenten gesteuert, die rückseitig gegenüber dem Magazin 20 vorstehen. Dadurch lässt sich auch die Geometrie des Büschelendes einstellen.

Das Verschmelzen kann durch einen beheizten Stempel 148 erfolgen, der die Büschelenden berühren kann oder von ihnen beabstandet bleiben kann, sodass durch Strahlungswärme (insbesondere über Infrarotlicht) die Filamente schmelzen. Alternativ lässt sich auch mit Heißluft ein Verschmelzen erreichen. Wichtig ist, dass für die gebildeten Borstenbüschel nur immer eine einzige, zugeordnete Verdickung erzeugt wird, denn nur diejenigen Filamente sollen miteinander durch das Verschmelzen verbunden werden, die auch später in derselben Verankerungsöffnung fixiert werden sollen. Gegebenenfalls kann hier eine Kühlung der Verdickungen 32 stattfinden, wie zuvor erläutert.

In der anschließenden Station F werden die Borstenbüschel mit ihren verdickten Befestigungsenden voraus in die Verankerungsöffnungen 12 des Borstenträgers 10 geschoben und darin wie zuvor bereits ausführlich erläutert, verpresst. Dieses Einschieben kann gleichzeitig, sequenziell oder in Gruppen sequenziell erfolgen.

Eine weitere Alternative besteht darin, dass eine Umlenkplatte mit entsprechenden Kanälen vorgesehen ist, in welche die Borstenbüschel 24 mit ihren verdickten Befestigungsenden voraus eingeschoben werden, um dann weiter in die Verankerungsöffnungen des Borstenträgers geschoben zu werden. Diese Variante bietet sich dann an, wenn im Magazin noch nicht ganz das spätere Lochbild der Bürste oder die Ausrichtung der Borstenbüschel 24 realisiert ist.

Die zuvor genannten separat hergestellten, singulären Borsten 24' können beliebig in jeder Station zugeführt werden, entweder dem Magazin 20 oder erst dem Borstenträger 10.

Die Druckkraft wird beispielsweise über zumindest einen Antrieb, z.B. einen Elektromotor 240 (siehe Figur 1f) vorzugsweise auf die Halterung 34 aufgebracht, gegebenenfalls unter Zwischenschaltung eines Getriebes wie einer Spindelmutter 242. Dies trifft natürlich auf sämtliche Ausführungsformen zu.

Der Elektromotor ist insbesondere ein Servomotor.

Generell können mit einem Antrieb auch mehrere Borstenträger 10 gleichzeitig verformt werden, um die zumindest eine Borste oder das zumindest eine Borstenbüschel 24 in der Verankerungsöffnung zu halten. Dazu hat die Halterung 34 mehrere komplementär zum Borstenträger geformte Ausnehmungen 38.

Um den Ausstoß von fertigen Bürsten zu erhöhen, sind insbesondere nebeneinander mehrere Antriebe vorgesehen, die wiederum mehrere Halterungen 34 antreiben, welche wiederum mehrere Borstenträger 10 aufnehmen.

Die Steuerung 51 ist entsprechend programmiert ausgebildet, dass das vorgenannte Verfahren in der Vorrichtung durchgeführt wird.

Mit der erfindungsgemäßen Vorrichtung und dem erfindungsgemäßen Verfahren lassen sich Borstenbüschel im Borstenträger verankern, die extrem lang und dünn sind. Die Erfindung schafft Borstenträger mit Borstenbüschel von einer Länge über 8 mm und einer Breite von weniger als 2 mm, insbesondere weniger als 1 mm.

Die entsprechenden Ränder der Verankerungsöffnungen müssen bei diesen großen Randlängen nicht zwingend um die gleiche Strecke nach innen geformt werden. Es hat sich herausgestellt, dass es ausreicht, einige weiter nach innen in Richtung Verankerungsöffnung verformte, überkragende Randabschnitte vorzusehen, die sich mit weniger weit nach innen verformten Randabschnitten abwechseln.

## Patentansprüche

1. Verfahren zum Herstellen einer Bürste, die einen Borstenträger (10) aus thermoplastischem Kunststoff mit einer Vorderseite (42) und einer Rückseite (206) und zumindest einer Verankerungsöffnung (12) aufweist, in welche zumindest eine Borste (24') aus thermoplastischem Kunststoff eingesetzt und darin ankerlos verankert wird, so dass sie von der Vorderseite (42) des Borstenträgers (10) absteht, **gekennzeichnet durch** folgende Schritte:
die wenigstens eine Borste (24') wird in eine Aufnahmeöffnung (26) eines Werkzeugteils (20) aufgenommen,
die wenigstens eine Borste (24') wird mit ihrem Befestigungsende, während sie noch in der Aufnahmeöffnung (26) sitzt, in eine beim Herstellen des Borstenträgers (10) gebildete Verankerungsöffnung (12) im Borstenträger (10) geschoben,
der Abstand des Werkzeugteils (20) zum Borstenträger (10) wird reduziert, sodass das Werkzeugteil (20) den Borstenträger (10) kontaktiert,
die Vorderseite (42) des Borstenträgers (10) wird auf eine Temperatur gebracht, die unterhalb der Schmelztemperatur des Borstenmaterials und/oder des Borstenträgermaterials liegt, insbesondere höchstens 85 % in °C der jeweiligen Schmelztemperatur des Borsten- und/oder des Borstenträgermaterials beträgt,
das Werkzeugteil (20) übt eine Druckkraft auf den erwärmten Borstenträger (10) aus und verformt den Borstenträger (10) zumindest im Bereich des die Verankerungsöffnung (12) umgebenden Randes (50) unter Reduzierung des Querschnittes der Verankerungsöffnung (12) derart, dass die zumindest eine Borste (24') in die Verankerungsöffnung (12) eingebettet und verankert ist,
der Abstand des Werkzeugteils (20) zum Borstenträger (10) wird vergrößert, sodass die zumindest eine Borste (24') aus der Aufnahmeöffnung (26) gezogen wird, und
die Rückseite (206) des Borstenträgers (10) wird, während die Druckkraft auf den Borstenträger (10) ausgeübt wird, aktiv gekühlt.

2. Verfahren nach Anspruch 1, **dadurch gekennzeichnet, dass** die Rückseite (206) des Borstenträgers (10) abgekühlt wird, insbesondere so dass die Rückseite (206) während des Aufbringens der Druckkraft maximal 25 °C warm ist.

3. Verfahren nach Anspruch 1 oder 2, **dadurch gekennzeichnet, dass** eine Halterung (32) während des Aufbringens der Druckkraft die Rückseite (206) des Borstenträgers (10) kontaktiert und eine Gegenkraft auf den Borstenträger (10) ausübt und den Borstenträger (10) kühlt, wobei die Halterung (32) flüssigkeitsgekühlt wird.

4. Verfahren nach einem der vorhergehenden Ansprüche, **dadurch gekennzeichnet, dass** zumindest Abschnitte einer die Vorderseite (42) und die Rückseite (206) des Borstenträgers (10) verbindenden Seitenfläche (212), während die Druckkraft auf den Borstenträger (10) ausgeübt wird, aktiv gekühlt wird.

5. Verfahren nach einem der vorhergehenden Ansprüche, **dadurch gekennzeichnet, dass** das Aufbringen der Druckkraft in einer Vorrichtung erfolgt, in der der Borstenträger (10) vorderseitig durch ein Werkzeugteil (20) und rückseitig durch eine Halterung (32) kontaktiert wird, während die Druckkraft auf den Borstenträger (10) ausgeübt wird, wobei die Vorrichtung beim Aufbringen der Druckkraft insbesondere auf Block gefahren wird, sodass sich die Halterung (32) und das Werkzeugteil (20) um den Borstenträger (10) herum vollflächig stirnseitig kontaktieren.

6. Verfahren nach Anspruch 5, **dadurch gekennzeichnet, dass** nach einer Einwirkzeit des Drucks, das Werkzeugteil (20) und die Halterung (32) so voneinander entfernt werden, dass sich zwischen der Vorderseite (42) und dem Werkzeugteil (20) ein Lüftungsspalt (228) ergibt, und dass die Einheit aus Borstenträger (10) und zumindest einer Borste (24') für eine vorgegebene Ruhephase in der Vorrichtung verbleiben.

7. Verfahren nach Anspruch 5 oder 6, **dadurch gekennzeichnet, dass** nach einer Zustellbewegung von Werkzeugteil (20) und Borstenträger (10) relativ zueinander, die mit Erreichen einer Schließstellung der Vorrichtung abgeschlossen ist, die Druckkraft über eine vorgegebene Haltezeit in der Schließstellung auf den Borstenträger (10) ausgeübt wird, insbesondere wobei die Haltezeit wenigstens 1 Sekunde und/oder maximal 3 Sekunden beträgt, vorzugsweise wobei der Borstenträger (10) während der Haltezeit, insbesondere zusätzlich während der Zustellbewegung, auf der Vorderseite (42) aufgeheizt wird.

8. Verfahren nach einem der vorhergehenden Ansprüche, **dadurch gekennzeichnet, dass** die zumindest eine Borste (24') oder das zumindest eine, gesamte Borstenbüschel (24) ein verdicktes Befestigungsende hat, und der Rand der Verankerungsöffnung (12) verformt und die Verankerungsöffnung (12) im Bereich ihrer Mündung so verengt wird, dass sich die Verankerungsöffnung (12) in Richtung zum Boden (208) aufweitet und das verdickte Befestigungsende (32') in Auszugsrichtung vom verformten Rand (50) hintergriffen wird.

9. Verfahren nach einem der vorhergehenden Ansprüche, **dadurch gekennzeichnet, dass** der Borstenträger (10) eine Rückseite (206) hat, welche durch das Werkzeugteil (20) während des Verankerns nicht erwärmt wird.

10. Verfahren nach einem der vorhergehenden Ansprüche, **dadurch gekennzeichnet, dass** das Werkzeugteil (20) zumindest während der gesamten Zeit, in der es Druck auf den Borstenträger (10) ausübt, den Borstenträger (10) stirnseitig aufheizt.

11. Verfahren nach einem der vorhergehenden Ansprüche, **dadurch gekennzeichnet, dass** das Werkzeugteil (20) einen Druck von wenigstens 200 bar, insbesondere wenigstens 400 bar, auf den Borstenträger (10) aufbringt.

12. Vorrichtung zum Herstellen einer zumindest eine Borste (24') oder zumindest ein Borstenbüschel (24) aufweisenden Bürste, die einen Borstenträger (10) mit zumindest einer Verankerungsöffnung (12) für die zumindest eine Borste (24') oder das zumindest eine Borstenbüschel (24) besitzt, zum Durchführen eines Verfahrens nach einem der vorhergehenden Ansprüche, **dadurch gekennzeichnet, dass** die Vorrichtung ein Werkzeugteil (20) mit zumindest einer Aufnahmeöffnung (26) für zumindest eine Borste (24') oder zumindest ein Borstenbüschel (24) hat und eine gegenüberliegende Halterung (34) hat, wobei Werkzeugteil (20) und Halterung (34) aufeinander zu und voneinander weg verfahrbar sind, und wobei das Werkzeugteil (20) beheizbar und die Halterung (34) mit einer aktiven Kühleinrichtung versehen ist.

13. Vorrichtung nach Anspruch 12, **dadurch gekennzeichnet, dass** die Aufnahmeöffnung (26) auf der dem Borstenträger (10) zugewandten Stirnseite (22) des Werkzeugteils (20) mündet, und dass das Werkzeugteil (20) eine zumindest Abschnitte der Stirnseite (32) erwärmende Heizung (39) besitzt, die so ausgebildet und so geregelt ist, dass die Stirnseite (32) auf eine Temperatur von maximal 140°C, insbesondere maximal 130°C aufgeheizt wird.

14. Vorrichtung nach Anspruch 12 oder 13, **dadurch gekennzeichnet, dass** die Vorrichtung eine Steuerung (51) hat, die so programmiert ist, dass das Werkzeugteil (20) im Betrieb permanent auf die beim Aufbringen des Drucks auf den Borstenträger (10) gewünschte Temperatur aufgeheizt ist.

## Claims

1. A method of producing a brush which comprises a bristle carrier (10) made from a thermoplastic resin having a front side (42) and a back side (206) and at least one anchoring opening (12), in which at least one bristle (24') made from a thermoplastic resin is inserted and anchored therein without using an anchor, so that it protrudes from the front side (42) of the bristle carrier (10), **characterized by** the following steps:
the at least one bristle (24') is accommodated in a receiving opening (26) of a tool part (20),
the at least one bristle (24') is inserted, by its fastening end, into an anchoring opening (12) in the bristle carrier (10), which has been formed during producing the bristle carrier (10), while the least one bristle is still located in the receiving opening (26),
the distance of the tool part (20) to the bristle carrier (10) is reduced, so that the tool part (20) contacts the bristle carrier (10),
the front side (42) of the bristle carrier (10) is brought to a temperature that is below the melting temperature of the bristle material and/or the bristle carrier material, in particular to a maximum of 85% in °C of the respective melting temperature of the bristle material and/or the bristle carrier material,
the tool part (20) applies a pressure force on the heated bristle carrier (10) and reshapes the bristle carrier (10) at least in the area of the edge (50) surrounding the anchoring opening (12) while reducing the cross-section of the anchoring opening (12) in such a way that the at least one bristle (24') is embedded and anchored in the anchoring opening (12),
the distance of the tool part (20) to the bristle carrier (10) is enlarged, so that the at least one bristle (24') is pulled out of the receiving opening (26), and
the back side (206) of the bristle carrier (10) is actively cooled while the pressure force is applied on the bristle carrier (10).

2. The method according to claim 1, **characterized in that** the back side (206) of the bristle carrier (10) is cooled, in particular so that during application of the pressure force the temperature of the back side (206) is at maximum 25°C.

3. The method according to claim 1 or 2, **characterized in that** a holder (32) contacts the back side (206) of the bristle carrier (10) during application of the pressure force, and applies a counterforce to the bristle carrier (10) and cools the bristle carrier (10), wherein the holder (32) is liquid-cooled.

4. The method according to any of the preceding claims, **characterized in that** at least portions of a side surface (212) connecting the front side (42) and the back side (206) of the bristle carrier (10) are actively cooled during application of the pressure force on the bristle carrier (10).

5. The method according to any of the preceding claims, **characterized in that** the application of the pressure force is carried out in an apparatus in which the bristle carrier (10) is contacted on its front side by a tool part (20) and on its back side by a holder (32), while the pressure force is applied to the bristle carrier (10), wherein the apparatus is, in particular, moved to stop during application of the pressure force, so that the front faces of the holder (32) and of the tool part (20) are in full surface contact around the bristle carrier (10).

6. The method according to claim 5, **characterized in that** after an application time of the pressure, the tool part (20) and the holder (32) are removed from each other in such a way that a ventilation gap (228) is created between the front side (42) and the tool part (20), and that the unit made up of the bristle carrier (10) and at least one bristle (24') remains in the apparatus for a predetermined rest period.

7. The method according to claim 5 or 6, **characterized in that** after a feed motion of the tool part (20) and the bristle carrier (10) relative to each other, which is completed upon reaching a closed position of the apparatus, the pressure force is applied to the bristle carrier (10) in the closed position during a predetermined dwell time, in particular wherein the dwell time is at least 1 second and/or at maximum 3 seconds, preferably wherein the bristle carrier (10) is heated on its front side (42) during the dwell time, in particular in addition during the feed motion.

8. The method according to any of the preceding claims, **characterized in that** the at least one bristle (24') or the at least one complete bristle tuft (24) has a thickened fastening end, and the edge of the anchoring opening (12) is reshaped and the anchoring opening (12) is constricted in the region of its mouth such that the anchoring opening (12) widens towards the bottom (208) and the reshaped edge (50) engages behind the thickened fastening end (32') in the pull-out direction.

9. The method according to any of the preceding claims, **characterized in that** the bristle carrier (10) includes a back side (206) which is not heated by the tool part (20) during anchoring.

10. The method according to any of the preceding claims, **characterized in that** the tool part (20) heats the bristle carrier (10) on the front face thereof at least during the entire period in which it applies pressure on the bristle carrier (10).

11. The method according to any of the preceding claims, **characterized in that** the tool part (20) applies a pressure of at least 200 bar, in particular at least 400 bar, on the bristle carrier (10).

12. An apparatus for producing a brush which includes at least one bristle (24') or at least one bristle tuft (24) and which includes a bristle carrier (10) having at least one anchoring opening (12) for the at least one bristle (24') or the at least one bristle tuft (24), for carrying out a method according to any of the preceding claims, **characterized in that** the apparatus has a tool part (20) having at least one receiving opening (26) for at least one bristle (24') or at least one bristle tuft (24) and an opposite holder (34), wherein the tool part (20) and the holder (34) are movable towards each other and away from each other, and wherein the tool part (20) is heatable and the holder (34) is provided with an active cooling device.

13. The apparatus according to claim 12, **characterized in that** the receiving opening (26) ends on the front face (22) of the tool part (20) facing the bristle carrier (10), and **in that** the tool part (20) includes a heating (39) which heats at least portions of the front face (32) and which is adapted and controlled such that the front face (32) is heated to a temperature of 140°C at the maximum, in particular 130°C at the maximum.

14. The apparatus according to claim 12 or 13, **characterized in that** the apparatus has a controller (51) which is programmed in such a way that during operation the tool part (20) is permanently heated to the temperature that is desired during application of the pressure on the bristle carrier (10).

## Revendications

1. Procédé de fabrication d'une brosse qui comprend un support de poils (10) en matière thermoplastique présentant une face avant (42) et une face arrière (206) et au moins une ouverture d'ancrage (12) dans laquelle au moins un poil (24') en matière thermoplastique est inséré et ancré sans moyen d'ancrage de manière à faire saillie de la face avant (42) du support de poils (10), **caractérisé par** les étapes suivantes :
ledit au moins un poil (24') est reçu dans une ouverture de réception (26) d'une pièce d'outil (20),
ledit au moins un poil (24') est poussé dans une ouverture d'ancrage (12) dans le support de poils (10) réalisée lors de la fabrication du support de poils (10) par son extrémité de fixation, alors qu'il est encore agencé dans l'ouverture de réception (26),
la distance entre la pièce d'outil (20) et le support de poils (10) est réduite de sorte que la pièce d'outil (20) contacte le support de poils (10),
la face avant (42) du support de poils (10) est amenée à une température qui est inférieure à la température de fusion de la matière des poils et/ou de la matière du support de poils, et est en particulier égale à 85% en °C au maximum de la température de fusion respective de la matière des poils et/ou du support de poils,
la pièce d'outil (20) exerce une force de pression sur le support de poils (10) chauffé et déforme le support de poils (10) au moins dans la zone du bord (50) entourant l'ouverture d'ancrage (12) en réduisant la section transversale de l'ouverture d'ancrage (12) de telle sorte que ledit au moins un poil (24') est noyé et ancré dans l'ouverture d'ancrage (12),
la distance entre la pièce d'outil (20) et le support de poils (10) étant augmentée de sorte que ledit au moins un poil (24') est tiré hors de l'ouverture de réception (26), et
la face arrière (206) du support de poils (10) est activement refroidie alors que la force de pression est exercée sur le support de poils (10).

2. Procédé selon la revendication 1, **caractérisé en ce que** la face arrière (206) du support de poils (10) est refroidie, en particulier de telle sorte que la face arrière (206) a une température de 25°C au maximum lors de l'application de la force de pression.

3. Procédé selon la revendication 1 ou 2, **caractérisé en ce qu'**une attache (32) contacte la face arrière (206) du support de poils (10) lors de l'application de la force de pression et exerce une force antagoniste sur le support de poils (10) et refroidit le support de poils (10), l'attache (32) étant refroidie par un liquide.

4. Procédé selon l'une des revendications précédentes, **caractérisé en ce qu'**au moins des parties d'une face latérale (212) reliant la face avant (42) et la face arrière (206) du support de poils (10) sont activement refroidies lors de l'application de la force de pression sur le support de poils (10).

5. Procédé selon l'une des revendications précédentes, **caractérisé en ce que** l'application de la force de pression est réalisée dans un dispositif dans lequel le support de poils (10) est contacté sur la face avant par une pièce d'outil (20) et sur la face arrière par une attache (32), alors que la force de pression est exercée sur le support de poils (10), le dispositif étant en particulier déplacé jusqu'à une position de butée lors de l'application de la force de pression de sorte que l'attache (32) et la pièce d'outil (20) se touchent du côté de la face frontale sur l'entière surface autour du support de poils (10).

6. Procédé selon la revendication 5, **caractérisé en ce qu'**après un temps d'action de la pression, la pièce d'outil (20) et l'attache (32) sont écartées l'une de l'autre de sorte qu'une fente d'aération (228) est produite entre la face avant (42) et la pièce d'outil (20), et **en ce que** l'unité composée du support de poils (10) et d'au moins un poil (24') reste dans le dispositif pendant une phase de repos prédéterminée.

7. Procédé selon la revendication 5 ou 6, **caractérisé en ce qu'**après un mouvement d'approche de la pièce d'outil (20) et du support de poils (10) l'une par rapport à l'autre qui est terminé lorsqu'une position de fermeture du dispositif est atteinte, la force de pression est exercée sur le support de poils (10) pendant un temps de maintien prédéterminé dans la position de fermeture, le temps de maintien durant au moins 1 seconde et/ou au maximum 3 secondes, le support de poils (10) étant de préférence chauffé sur la face avant (42) pendant le temps de maintien, en particulier addionnellement pendant le mouvement d'approche.

8. Procédé selon l'une des revendications précédentes, **caractérisé en ce que** ledit au moins un poil (24') ou ladite au moins une touffe de poils complète (24) présente une extrémité de fixation renflée, et **en ce que** le bord de l'ouverture d'ancrage (12) est déformée et l'ouverture d'ancrage (12) est rétrécie dans la zone de son débouchement de sorte que l'ouverture d'ancrage (12) s'évase en direction du fond (208) et le bord déformé (50) s'engage à l'arrière de l'extrémité de fixation renflée (32') dans le sens d'extraction.

9. Procédé selon l'une des revendications précédentes, **caractérisé en ce que** le support de poils (10) présente une face arrière (206) qui n'est pas chauffée par la pièce d'outil (20) lors de l'ancrage.

10. Procédé selon l'une des revendications précédentes, **caractérisé en ce que** la pièce d'outil (20) chauffe le support de poils (10) du côté de la face frontale au moins durant toute la période où il exerce une pression sur le support de poils (10).

11. Procédé selon l'une des revendications précédentes, **caractérisé en ce que** la pièce d'outil (20) exerce une pression d'au moins 200 bar, en particulier d'au moins 400 bar sur le support de poils (10).

12. Dispositif de fabrication d'une brosse présentant au moins un poil (24') ou une touffe de poils (24) et comprenant un support de poils (10) qui présente au moins une ouverture d'ancrage (12) pour ledit au moins un poil (24') ou ladite au moins une touffe de poils (24) pour la réalisation d'un procédé selon l'une des revendications précédentes, **caractérisé en ce que** le dispositif comprend une pièce d'outil (20) qui présente au moins une ouverture de réception (26) pour ledit au moins un poil (24') ou ladite au moins une touffe de poil (24) et présente une attache opposée (34), la pièce d'outil (20) et l'attache (34) étant aptes à être déplacées l'une vers l'autre et en éloignement l'une de l'autre, et la pièce d'outil (20) étant apte à être chauffée, et l'attache (34) étant pourvue d'un moyen de refroidissement actif.

13. Dispositif selon la revendication 12, **caractérisé en ce que** l'ouverture de réception (26) débouche sur la face frontale (22) de la pièce d'outil (20) qui est tournée vers le support de poils (10), et **en ce que** la pièce d'outil (20) présente un dispositif de chauffage (39) qui chauffe au moins des parties de la face frontale (32) et qui est réalisé et réglé de telle sorte que la face frontale (32) est chauffée à une température de 140°C au maximum, en particulier de 130°C au maximum.

14. Dispositif selon la revendication 12 ou 13, **caractérisé en ce que** le dispositif présente une commande (51) qui est programmée de telle sorte que la pièce d'outil (20), pendant le fonctionnement, est en permanence chauffée à la température souhaitée lors de l'application de la pression sur le support de poils (10).
